# EUROPÄISCHE PATENTSCHRIFT

(11) **EP 2 802 933 B1**
(45) Veröffentlichungstag und Bekanntmachung des Hinweises auf die Patenterteilung: **22.07.2020**
(21) Anmeldenummer: 13700213.5
(22) Anmeldetag: 09.01.2013
(51) Int. Cl.: G02B 27/64

(54) **OPTISCHES SYSTEM ZUR ABBILDUNG EINES OBJEKTS**
OPTICAL SYSTEM FOR IMAGING AN OBJECT
SYSTÈME OPTIQUE POUR FORMER UNE IMAGE D'UN OBJET

(30) Priorität: 13.01.2012 DE 102012200521; 13.01.2012 US 201261586262 P
(43) Veröffentlichungstag der Anmeldung: 19.11.2014
(60) Teilanmeldung: 20179792.5
(73) Patentinhaber: Carl Zeiss AG, 73447 Oberkochen (DE); Carl Zeiss Meditec AG, 07745 Jena (DE)
(72) Erfinder: BACH, Christian, 35418 Buseck (DE); MUTZ, Erhard, 35647 Waldsolms (DE); HEINTZ, Christof, 61440 Oberursel (DE); REINHARDT, Jörg, 99089 Erfurt (DE)
(74) Vertreter: Tongbhoyai, Martin
(86) Internationale Anmeldenummer: PCT/EP2013/050279
(87) Internationale Veröffentlichungsnummer: WO 2013/104654

(56) Entgegenhaltungen:
- DE-A1-102005 027 870
- DE-C2- 3 933 255
- US-A- 4 318 584
- US-A- 5 598 296
- US-A- 5 672 862
- US-A- 6 067 194
- US-A1- 2005 128 308
- US-A1- 2007 097 516
- Anonymous: "Techno-Stabi 14x40 specification sheet", Fujifilm Europe , XP002694004, Gefunden im Internet: URL:http://www.fujifilm.eu/eu/products/opt ical-devices/binoculars/p/techno-stabi-14x 40-1/#specifications [gefunden am 2013-03-07]
- Warren J Smith: "Modern Lens Design, Second Edition", 12 November 2004 (2004-11-12), McGraw-Hill ISBN: 0071438300 pages 160-176,

## Beschreibung

Die Erfindung betrifft ein optisches System zur Abbildung eines Objekts, wobei das optische System ein Objektiv, eine Bildstabilisierungseinheit und eine Bildebene aufweist. Bei einem Ausführungsbeispiel ist beispielsweise das optische System mit einem Okular versehen.
Das oben bezeichnete optische System wird beispielsweise in einem Fernrohr oder einem Fernglas eingesetzt. Das durch das Fernrohr oder das Fernglas von einem Beobachter erfasste Bild wird oft verwackelt wahrgenommen, da Zitterbewegungen oder Drehbewegungen der Hände des Benutzers, aber auch Bewegungen des Untergrundes wiederum Bewegungen des optischen Systems verursachen. Um dieses zu umgehen, ist es bekannt, Bilder in einem optischen System zu stabilisieren. Bekannte Lösungen verwenden Stabilisierungseinrichtungen zur Stabilisierung des Bildes mittels einer mechanischen Einrichtung und/oder einer elektronischen Einrichtung.

Aus der DE 23 53 101 C3 ist ein optisches System in Form eines Fernrohrs bekannt, das ein Objektiv, eine Bildstabilisierungseinheit in Form eines Prismenumkehrsystems sowie ein Okular aufweist. Das Prismenumkehrsystem ist kardanisch in einem Gehäuse des Fernrohrs gelagert. Hierunter wird verstanden, dass das Prismenumkehrsystem derart in dem Gehäuse des Fernrohrs angeordnet ist, dass das Prismenumkehrsystem um zwei zueinander rechtwinklig angeordnete Achsen drehbar gelagert ist. Zur drehbaren Lagerung wird in der Regel eine Vorrichtung verwendet, die als Kardanik bezeichnet wird. Ein Gelenkpunkt des kardanisch im Gehäuse gelagerten Prismenumkehrsystems ist mittig zwischen einer bildseitigen Hauptebene des Objektivs und einer objektseitigen Hauptebene des Okulars angeordnet. Das kardanisch gelagerte Prismenumkehrsystem wird aufgrund seiner Trägheit durch auftretende Drehzitterbewegungen nicht bewegt. Es bleibt somit fest im Raum stehen. Auf diese Weise wird eine Bildverwackelung, die aufgrund der Drehzitterbewegung des Gehäuses entsteht, kompensiert.

Aus der DE 39 33 255 C2 ist ein binokulares Fernglas mit einer Bildstabilisierung bekannt, das ein Prismenumkehrsystem aufweist. Das Prismenumkehrsystem weist Porro-Prismen auf, die jeweils eine Kippachse aufweisen. Die Porro-Prismen sind um ihre jeweilige Kippachse schwenkbar ausgebildet. Zur Schwenkung der Porro-Prismen sind Motoren vorgesehen. Die Schwenkung erfolgt in Abhängigkeit einer Zitterbewegung, die ein Wackeln eines beobachten Bildes verursacht.

Ein weiteres optisches System mit einer Bildstabilisierungseinheit ist aus der US 5,910,859 bekannt. Die Bildstabilisierungseinheit dieses optischen Systems ist in Form eines Umkehrsystems ausgebildet, das in einem optisch neutralen Punkt mittig zwischen einem Objektiv und einem Okular angeordnet ist. Unter einem optisch neutralen Punkt wird ein Punkt verstanden, um den das Objektiv und das Okular relativ im Raum gedreht werden können, ohne dass die Position eines Bildes eines Objekts sich verschiebt, wobei das Umkehrsystem fest im Raum stehen bleibt. Das Umkehrsystem ist um den optisch neutralen Punkt sowie um zwei Achsen, die senkrecht zur optischen Achse angeordnet sind, beweglich angeordnet. Wenn nun das Umkehrsystem auch bei einer Zitterbewegung stabil im Raum gehalten wird, dann wird auch das Bild eines Objekts bei Betrachtung des Objekts mittels dieses bekannten optischen Systems stabilisiert. Der optisch neutrale Punkt lässt sich auch wie folgt beschreiben. Unter einem optisch neutralen Punkt wird ein Punkt auf einer optischen Achse zwischen einem Objektiv und einem Okular verstanden, um den eine Bildstabilisierungseinheit drehbar angeordnet ist, so dass bei einer Drehzitterbwegung um einen beliebigen Punkt die Richtung des Bildes eines Objekts, welches durch das Objektiv und das Okular betrachtet wird, fest im Raum stehen bleibt, ebenso wie die Bildstabilisierungseinheit.

Überlegungen haben ergeben, dass die in der US 5,910,859 vorgeschlagene Position des Umkehrsystems ein relativ großes Umkehrsystem bedingt, um den Strahl nicht zu vignettieren. Somit ist ein Gehäuse, in dem das Umkehrsystem angeordnet ist, ebenfalls recht groß. Es weist die Form eines Kastens auf. Von vielen Benutzern wird der ästhetische Eindruck, den man von diesem Gerät in Backsteinform erhält, als nicht sehr schön bezeichnet. Ferner hat ein relativ großes Umkehrsystem zur Folge, dass das Trägheitsmoment des Umkehrsystems recht groß ist. Es sind daher relativ große Kräfte notwendig, um das Umkehrsystem zu bewegen. Um diese relativ großen Kräfte bereitzustellen, werden in der Regel Motoren mit einer hohen Leistung verwendet, die ihrerseits einen großen Bauraum benötigen. Derartige Motoren weisen ferner einen hohen Energieverbrauch auf, so dass dies zu verkürzten Laufzeiten von Batterien führt, welche in der Regel für die Energieversorgung der Motoren verwendet werden.

Ferner ist es bei einem aus dem Stand der Technik bekannten Fernglas bekannt, eine einzelne Stabilisierungseinheit gemeinsam sowohl für ein erstes optisches Teilsystem in einem ersten Tubus als auch für ein zweites optisches Teilsystem in einem zweiten Tubus zu verwenden. Baubedingt ist diese einzelne Stabilisierungseinheit mindestens so breit wie der Abstand des ersten Tubus zu dem zweiten Tubus. Ferner hat diese einzelne Stabilisierungseinheit ein hohes Gewicht. Wenn nun ein Motor zur Verstellung der einzelnen Stabilisierungseinheit verwendet wird, muss dieser wiederum leistungsstark sein, was wiederum zu den bereits erläuterten Problemen führt.

Ferner wird hinsichtlich des Standes der Technik auf die US 2005/0128308 A1, auf die US 2007/0097516 A1, auf die US 6,067,194 A, auf die US 4,318,584 A, eine Veröffentlichung "Techno-Stabi 14x40 specification sheet" sowie auf die DE 10 2005 027 870 A1 verwiesen.

Der Erfindung liegt die Aufgabe zugrunde, ein optisches System zur Abbildung eines Objekts anzugeben, das eine Bildstabilisierungseinheit mit einem relativ geringen Trägheitsmoment aufweist, so dass im Vergleich zum Stand der Technik geringere Kräfte zur Verstellung der Bildstabilisierungseinheit und ein kleineres Gehäuse für das optische System verwendet werden können.

Erfindungsgemäß wird die Aufgabe durch ein optisches System mit den Merkmalen des Anspruchs 1 gelöst. Weitere Merkmale der Erfindung ergeben sich aus der nachfolgenden Beschreibung, den nachfolgenden Ansprüchen und/oder den beigefügten Zeichnungen.

Das erfindungsgemäße optische System zur Abbildung eines Objekts weist ein erstes Objektiv, eine erste Bildstabilisierungseinheit sowie eine erste Bildebene auf. Von dem ersten Objektiv in Richtung der ersten Bildebene gesehen sind zunächst das erste Objektiv, dann die erste Bildstabilisierungseinheit und dann die erste Bildebene entlang einer ersten optischen Achse des optischen Systems angeordnet. Bei einem Ausführungsbeispiel ist es vorgesehen, dass das erste Objektiv zur Fokussierung ausgebildet ist und beispielsweise entlang einer ersten optischen Achse zur Fokussierung verschoben wird. Bei einem weiteren Ausführungsbeispiel ist es vorgesehen, dass das erste Objektiv mindestens eine erste Fronteinheit und mindestens eine erste Fokussiereinheit aufweist, wobei die erste Fokussiereinheit zur Fokussierung entlang der ersten optischen Achse verschoben wird. Wiederum alternativ ist es vorgesehen, dass die Fokussierung durch ein erstes Okular erfolgt, welches beispielsweise am optischen System vorgesehen ist und auf das weiter unten noch eingegangen wird.

Erfindungsgemäß ist es nun vorgesehen, dass die erste Bildstabilisierungseinheit eine erste Eintrittsfläche und eine erste Austrittsfläche aufweist. Die erste Eintrittsfläche ist zum ersten Objektiv gerichtet. Die erste Austrittsfläche hingegen ist zur ersten Bildebene gerichtet. Ferner ist die erste Austrittsfläche in einem Bereich von 1 mm bis 20 mm beabstandet zur ersten Bildebene angeordnet.

Die Erfindung beruht auf der überraschenden Erkenntnis, dass die Anordnung der ersten Austrittsfläche der ersten Bildstabilisierungseinheit relativ zur ersten Bildebene in dem vorgenannten Bereich es ermöglicht, das Trägheitsmoment der ersten Bildstabilisierungseinheit derart zu verringern, dass Motoren mit einer beispielsweise im Vergleich zum Stand der Technik relativ geringen Kraft zur Verstellung der ersten Bildstabilisierungseinheit verwendet werden können. Gleichzeitig ist es möglich, dass kleinere Bildstabilisierungseinheiten als im Stand der Technik verwendet werden können, ohne dass die Abbildungseigenschaften des erfindungsgemäßen optischen System sich verschlechtern. Somit kann aber auch ein kleineres Gehäuse als im Stand der Technik verwendet werden, so dass ein für viele Benutzer schöner ästhetischer Eindruck entsteht.

Bei einer Ausführungsform des erfindungsgemäßen optischen Systems ist es zusätzlich oder alternativ vorgesehen, dass das optische System eines der folgenden Merkmale aufweist: Die erste Austrittsfläche ist in einem Bereich von 2 mm bis 15 mm beabstandet zur ersten Bildebene angeordnet oder die erste Austrittsfläche ist in einem Bereich von 3 mm bis 12 mm beabstandet zur ersten Bildebene angeordnet. Überlegungen haben überraschend gezeigt, dass bei Anordnung der ersten Austrittsfläche in einem der vorgenannten Bereiche das gewünschte Ziel besonders gut zu erreichen ist.

Bei einer weiteren Ausführungsform des optischen Systems gemäß der Erfindung ist es zusätzlich vorgesehen, dass das optische System eines der folgenden Merkmale aufweist:
- in der ersten Bildebene ist eine erste Bilderfassungseinheit angeordnet,
- in der ersten Bildebene ist eine erste Bilderfassungseinheit angeordnet, die als ein Sensor auf Halbleiterbasis ausgebildet ist, oder
- das optische System weist mindestens ein erstes Okular auf, wobei von dem ersten Objektiv in Richtung der ersten Bildebene gesehen zunächst die erste Bildebene und dann das erste Okular angeordnet sind.

Zusätzlich ist es vorgesehen, in der ersten Bildebene eine erste Strichplatte anzuordnen, die an einem ersten Gehäuse oder an der ersten Bilderfassungseinheit angeordnet ist, wobei die erste Strichplatte jede Bewegung der ersten Bilderfassungseinheit ebenfalls durchführt.

Die vorgenannten Ausführungsbeispiele weisen somit vom ersten Objektiv aus in Richtung der ersten Bildebene gesehen die folgende Reihenfolge der einzelnen Einheiten auf: das erste Objektiv - die erste Bildstabilisierungseinheit - die erste Bildebene - das erste Okular. Bei einem weiteren Ausführungsbeispiel ist es vorgesehen, dass die Bildebene des ersten Objektivs und die Bildebene des ersten Okulars zusammenfallen.

Bei dem erfindungsgemäßen optischen Systems ist es vorgesehen, dass das optische System ein erstes

Gehäuse aufweist, wobei das erste Objektiv, die erste Bildstabilisierungseinheit und die erste Bildebene in diesem ersten Gehäuse angeordnet sind. Zusätzlich ist es bei einem weiteren Ausführungsbeispiel des erfindungsgemäßen optischen Systems vorgesehen, dass das erste Okular in dem ersten Gehäuse angeordnet ist.

Bei dem erfindungsgemäßen optischen System ist es vorgesehen, dass das optische System ein zweites Objektiv, eine zweite Bildstabilisierungseinheit und eine zweite Bildebene aufweist. Auch die vorgenannten Einheiten sind in einer bestimmten Reihenfolge angeordnet. So ist es vorgesehen, dass von dem zweiten Objektiv in Richtung der zweiten Bildebene gesehen zunächst das zweite Objektiv, dann die zweite Bildstabilisierungseinheit und dann im Anschluss die zweite Bildebene entlang einer zweiten optischen Achse des optischen Systems angeordnet sind. Bei einem Ausführungsbeispiel ist es vorgesehen, dass das zweite Objektiv zur Fokussierung ausgebildet ist und beispielsweise entlang einer zweiten optischen Achse zur Fokussierung verschoben wird. Bei einem weiteren Ausführungsbeispiel ist es vorgesehen, dass das zweite Objektiv mindestens eine zweite Fronteinheit und mindestens eine zweite Fokussiereinheit aufweist, wobei die zweite Fokussiereinheit zur Fokussierung entlang der zweiten optischen Achse verschoben wird. Wiederum alternativ ist es vorgesehen, dass die Fokussierung durch ein zweites Okular erfolgt, welches beispielsweise am optischen System vorgesehen ist und auf das weiter unten noch eingegangen wird.

Die zweite Bildstabilisierungseinheit weist nun eine zweite Eintrittsfläche und eine zweite Austrittsfläche auf. Die zweite Eintrittsfläche ist zum zweiten Objektiv hin gerichtet. Hingegen ist die zweite Austrittsfläche zur zweiten Bildebene gerichtet. Die zweite Austrittsfläche ist in einem Bereich von 1 mm bis 20 mm beabstandet zur zweiten Bildebene angeordnet. Insbesondere ist es vorgesehen, dass die zweite Austrittsfläche in einem Bereich von 2 mm bis 15 mm beabstandet zur zweiten Bildebene angeordnet ist. Bei einer wiederum weiteren Ausführungsform des erfindungsgemäßen optischen Systems ist es vorgesehen, dass die zweite Austrittsfläche in einem Bereich von 3 mm bis 12 mm beabstandet zur zweiten Bildebene angeordnet ist. Die vorgenannten Ausführungsbeispiele eignen sich insbesondere für ein Fernglas, das für jedes Auge eines Benutzers optische Einheiten aufweist.

Bei einer weiteren Ausführungsform des erfindungsgemäßen optischen Systems ist es zusätzlich vorgesehen, dass das optische System eines der folgenden Merkmale aufweist:
- in der zweiten Bildebene ist eine zweite Bilderfassungseinheit angeordnet,
- in der zweiten Bildebene ist eine zweite Bilderfassungseinheit angeordnet, die als Sensor auf Halbleiterbasis ausgebildet ist, oder
- das optische System weist mindestens ein zweites Okular auf, wobei von dem zweiten Objektiv in Richtung der zweiten Bildebene gesehen zunächst die zweite Bildebene und dann das zweite Okular angeordnet sind.

Zusätzlich ist es vorgesehen, in der zweiten Bildebene eine zweite Strichplatte anzuordnen, die an einem zweiten Gehäuse oder an der zweiten Bilderfassungseinheit angeordnet ist, wobei die zweite Strichplatte jede Bewegung der zweiten Bilderfassungseinheit ebenfalls durchführt.

Die vorgenannten Ausführungsbeispiele weisen wiederum somit vom zweiten Objektiv aus in Richtung der zweiten Bildebene gesehen die folgende Reihenfolge der einzelnen Einheiten auf: das zweite Objektiv - die zweite Bildstabilisierungseinheit - die zweite Bildebene - das zweite Okular. Bei einem weiteren Ausführungsbeispiel ist es vorgesehen, dass die Bildebene des zweiten Objektivs und die Bildebene des zweiten Okulars zusammenfallen.

Bei dem erfindungsgemäßen optischen System ist es vorgesehen, dass das optische System ein zweites Gehäuse aufweist. In diesem zweiten Gehäuse sind das zweite Objektiv, die zweite Bildstabilisierungseinheit und die zweite Bildebene angeordnet. Das zweite Okular ist beispielsweise ebenfalls in dem vorgenannten zweiten Gehäuse angeordnet.

Das optische System, das zwei Gehäuse aufweist, weist im Grunde zwei optische Teilsysteme auf. So ist in dem ersten Gehäuse ein erstes optisches Teilsystem angeordnet (beispielsweise für eines der beiden Augen eines Benutzers). Hingegen ist in dem zweiten Gehäuse ein zweites optisches Teilsystem angeordnet (beispielsweise für das Zweite der beiden Augen eines Benutzers).

Bei dem erfindungsgemäßen optischen System ist das erste Gehäuse mit dem zweiten Gehäuse über mindestens eine Knickbrücke verbunden. Die Knickbrücke weist ein an dem ersten Gehäuse angeordnetes erstes Scharnierteil auf. Ferner weist die Knickbrücke ein an dem zweiten Gehäuse angeordnetes zweites Scharnierteil auf. Die Knickbrücke ermöglicht die Einstellung des optischen Systems derart, dass das erste Gehäuse und das zweite Gehäuse auf den Augenabstand eines Benutzers eingestellt werden können. Das erste Gehäuse und das zweite Gehäuse werden demnach derart relativ zueinander angeordnet, dass das erste Gehäuse an einem der beiden Augen des Benutzers angeordnet ist und dass das zweite Gehäuse an dem anderen der beiden Augen des Benutzers angeordnet ist. Mit anderen Worten lässt sich das wie folgt ausdrücken. Das erste Okular weist eine erste Okularachse auf, hingegen weist das zweite Okular eine zweite Okularachse auf. Das erste Auge eines Benutzers weist eine erste Augenachse auf, und das zweite Auge eines Benutzers weist eine zweite Augenachse auf. Das erste Gehäuse und das zweite Gehäuse werden demnach derart relativ zueinander angeordnet, dass die erste Okularachse sowie die erste Augenachse fluchten und dass die zweite Okularachse und die zweite Augenachse fluchten. Bei dem hier erläuterten Ausführungsbeispiel ist es durch die Verwendung einer Knickbrücke nicht notwendig, eine Pupillendistanz mittels rhombischer Prismen einzustellen.

Bei einem wiederum weiteren Ausführungsbeispiel des erfindungsgemäßen optischen Systems ist es zusätzlich vorgesehen, dass die erste Bildstabilisierungseinheit als ein erstes Umkehrsystem ausgebildet ist. Insbesondere ist es vorgesehen, dass die erste Bildstabilisierungseinheit als ein erstes Prismenumkehrsystem oder als ein erstes Linsenumkehrsystem ausgebildet ist.

Bei einem wiederum weiteren Ausführungsbeispiel des erfindungsgemäßen optischen Systems ist es zusätzlich vorgesehen, dass die zweite Bildstabilisierungseinheit als ein zweites Umkehrsystem ausgebildet ist. Insbesondere ist es vorgesehen, dass die zweite Bildstabilisierungseinheit als ein zweites Prismenumkehrsystem oder als ein zweites Linsenumkehrsystem ausgebildet ist.

Bei dem erfindungsgemäßen optischen System ist es zusätzlich vorgesehen, dass die erste Bildstabilisierungseinheit kardanisch im ersten Gehäuse angeordnet ist. Hierunter wird verstanden, dass die erste Bildstabilisierungseinheit derart in einer Vorrichtung angeordnet ist, dass die erste Bildstabilisierungseinheit um zwei zueinander rechtwinklig angeordnete Achsen drehbar gelagert ist. Sie verlaufen beispielsweise nicht durch einen ersten optischen neutralen Punkt auf der ersten optischen Achse. Bei einem Ausführungsbeispiel ist es vorgesehen, dass die beiden Achsen senkrecht zur ersten optischen Achse angeordnet sind sowie sich in einem ersten Schnittpunkt schneiden. Insbesondere ist es vorgesehen, dass die erste Bildstabilisierungseinheit um eine erste Achse und um eine zweite Achse drehbar im ersten Gehäuse angeordnet ist, wobei die erste Achse und die zweite Achse sich in einem ersten Schnittpunkt schneiden. Dieser Schnittpunkt ist beispielsweise unterschiedlich zu dem ersten optischen neutralen Punkt auf der ersten optischen Achse. Insbesondere ist es vorgesehen, dass die erste Achse und die zweite Achse die erste optische Achse schneiden. Bei einem weiteren Ausführungsbeispiel ist es vorgesehen, dass die erste Achse und die zweite Achse sich im Schwerpunkt der ersten Bildstabilisierungseinheit schneiden. Hierdurch wird ein sehr kleines Trägheitsmoment der ersten Bildstabilisierungseinheit erzielt. Die Kraft zur Verstellung der ersten Bildstabilisierungseinheit ist relativ gering, so dass nur eine geringe Energie zur Verstellung benötigt wird.

Bei einem wiederum weiteren Ausführungsbeispiel des erfindungsgemäßen optischen Systems ist es zusätzlich vorgesehen, dass das optische System eines der folgenden Merkmale aufweist:
- mindestens eine erste Antriebseinheit zur Bewegung der ersten Bildstabilisierungseinheit,
- mindestens eine erste Antriebseinheit zur Bewegung der ersten Bildstabilisierungseinheit, wobei die erste Antriebseinheit mindestens eine erste Piezokeramik aufweist,
- mindestens eine erste Antriebseinheit zur Bewegung der ersten Bildstabilisierungseinheit, wobei die erste Antriebseinheit mindestens einen ersten Piezoaktor aufweist,
- mindestens eine erste Antriebseinheit zur Bewegung der ersten Bildstabilisierungseinheit, wobei die erste Antriebseinheit mindestens einen ersten Piezo-Biegeaktor aufweist,
- mindestens eine erste Antriebseinheit zur Bewegung der ersten Bildstabilisierungseinheit und mindestens eine Steuerungseinheit zur Steuerung der ersten Antriebseinheit,
- mindestens eine erste Antriebseinheit zur Bewegung der ersten Bildstabilisierungseinheit, wobei die erste Antriebseinheit mindestens einen ersten Piezo-Ultraschallaktor aufweist, oder
- mindestens eine erste Antriebseinheit zur Bewegung der ersten Bildstabilisierungseinheit, wobei die erste Antriebseinheit mindestens einen ersten Piezo-Wanderwellenaktor aufweist.

Bei einem wiederum weiteren Ausführungsbeispiel des erfindungsgemäßen optischen Systems ist es zusätzlich vorgesehen, dass die zweite Bildstabilisierungseinheit kardanisch im zweiten Gehäuse angeordnet ist. Hierunter wird bei der Erfindung verstanden, dass die zweite Bildstabilisierungseinheit derart in einer Vorrichtung angeordnet ist, dass die zweite Bildstabilisierungseinheit um zwei zueinander rechtwinklig angeordnete Achsen drehbar gelagert ist. Sie verlaufen beispielsweise nicht durch einen zweiten optischen neutralen Punkt auf der zweiten optischen Achse. Bei einem Ausführungsbeispiel ist es vorgesehen, dass die beiden Achsen senkrecht zur zweiten optischen Achse angeordnet sind sowie sich in einem zweiten Schnittpunkt schneiden. Insbesondere ist es vorgesehen, dass die zweite Bildstabilisierungseinheit um eine dritte Achse und um eine vierte Achse drehbar im zweiten Gehäuse angeordnet ist, wobei die dritte Achse und die vierte Achse sich in dem zweiten Schnittpunkt schneiden. Dieser Schnittpunkt ist beispielsweise unterschiedlich zu dem zweiten optischen neutralen Punkt auf der zweiten optischen Achse. Insbesondere ist es vorgesehen, dass die dritte Achse und die vierte Achse die zweite optische Achse schneiden. Bei einem weiteren Ausführungsbeispiel ist es vorgesehen, dass die dritte Achse und die vierte Achse sich im Schwerpunkt der zweiten Bildstabilisierungseinheit schneiden. Hierdurch wird ein sehr kleines Trägheitsmoment der zweiten Bildstabilisierungseinheit erzielt. Die Kraft zur Verstellung der zweiten Bildstabilisierungseinheit ist relativ gering, so dass nur eine geringe Energie zur Verstellung benötigt wird.

Bei einem wiederum weiteren Ausführungsbeispiel des erfindungsgemäßen optischen Systems ist es zusätzlich vorgesehen, dass das optische System eines der folgenden Merkmale aufweist:
- mindestens eine zweite Antriebseinheit zur Bewegung der zweiten Bildstabilisierungseinheit,
- mindestens eine zweite Antriebseinheit zur Bewegung der zweiten Bildstabilisierungseinheit, wobei die zweite Antriebseinheit mindestens eine zweite Piezokeramik aufweist,
- mindestens eine zweite Antriebseinheit zur Bewegung der zweiten Bildstabilisierungseinheit, wobei die zweite Antriebseinheit mindestens einen zweiten Piezoaktor aufweist,
- mindestens eine zweite Antriebseinheit zur Bewegung der zweiten Bildstabilisierungseinheit, wobei die zweite Antriebseinheit mindestens einen zweiten Piezo-Biegeaktor aufweist,
- mindestens eine zweite Antriebseinheit zur Bewegung der zweiten Bildstabilisierungseinheit und mindestens eine zweite Steuerungseinheit zur Steuerung der zweiten Antriebseinheit,
- mindestens eine zweite Antriebseinheit zur Bewegung der zweiten Bildstabilisierungseinheit, wobei die zweite Antriebseinheit mindestens einen zweiten Piezo-Ultraschallaktor aufweist, oder
- mindestens eine zweite Antriebseinheit zur Bewegung der zweiten Bildstabilisierungseinheit, wobei die zweite Antriebseinheit mindestens einen zweiten Piezo-Wanderwellenaktor aufweist.

Überlegungen haben ergeben, dass die Ausbildung mindestens einer der vorgenannten Antriebseinheiten als eine Antriebseinheit basierend auf der Piezo-Technik besonders von Vorteil ist. Derartige Antriebseinheiten weisen einen geringen Stromverbrauch auf. Ferner weisen derartige Antriebseinheiten bei einer Abschaltung einer Steuerspannung eine derart ausreichend große Haltekraft auf, dass eine beweglich angeordnete Bildstabilisierungseinheit nicht noch zusätzlich arretiert werden muss. Eine Festsetzung einer beweglichen Bildstabilisierungseinheit ist wünschenswert, wenn das optische System nicht benutzt wird, um Schäden an der Bildstabilisierungseinheit zu vermeiden und/oder um das optische System (beispielsweise ein Fernglas) auch bei einer ausgeschalteten Stabilisierungsfunktion weiterhin als Fernglas benutzen zu können. Ein weiterer Vorteil derartiger Antriebseinheiten ist, dass die Bewegung derartiger Antriebseinheiten aufgrund der direkten Abhängigkeit einer zugeführten Steuerspannung sehr genau ist. Demnach können Bewegungen der vorgenannten beweglichen Bildstabilisierungseinheiten recht genau gesteuert werden. Zudem ermöglicht erst die Erfindung die Verwendung der oben beschriebenen Antriebseinheiten. Diese Antriebseinheiten stellen eine relativ geringe Antriebskraft zur Verfügung, die für die Verstellung von Bildstabilisierungseinheiten nach dem Stand der Technik nicht ausreicht. Aus diesem Grunde macht es keinen Sinn, die beschriebenen Antriebseinheiten beim Stand der Technik zur Verstellung von Bildstabilisierungseinheiten einzusetzen.

Bei einem wiederum weiteren Ausführungsbeispiel des erfindungsgemäßen optischen Systems weist das optische System mindestens eine Steuerungseinheit zur Steuerung einer ersten Antriebseinheit zur Bewegung der ersten Bildstabilisierungseinheit und einer zweiten Antriebseinheit zur Bewegung der zweiten Bildstabilisierungseinheit auf. Dieses Ausführungsbeispiel sieht somit eine einzelne Steuerungseinheit für zwei Antriebseinheiten vor, nämlich für die erste Antriebseinheit und für die zweite Antriebseinheit.

Bei einem weiteren Ausführungsbeispiel des erfindungsgemäßen optischen Systems ist es zusätzlich vorgesehen, dass das optische System mindestens eine Steuereinheit aufweist, die derart ausgebildet ist, dass sie beispielsweise auf Basis einer Koordinatentransformation und/oder weiterer mathematischer Verfahren Steuersignale, die für die erste Antriebseinheit gedacht sind, aus einem ersten Koordinatensystem in Steuersignale für die zweite Antriebseinheit in einem zweiten Koordinatensystem umwandeln kann.

Bei einem Ausführungsbeispiel des erfindungsgemäßen optischen Systems ist es zusätzlich vorgesehen, dass das optische System eines der folgenden Merkmale aufweist:
- mindestens einen Bewegungsdetektor zur Ermittlung einer Bewegung des optischen Systems, beispielsweise eine rotatorische und/oder eine translatorische Zitterbewegung,
- mindestens einen ersten Bewegungsdetektor zur Ermittlung einer Bewegung des optischen Systems und mindestens einen zweiten Bewegungsdetektor zur Ermittlung einer Bewegung des optischen Systems, wobei die vorgenannten Bewegungen beispielsweise eine rotatorische und/oder eine translatorische Zitterbewegung, umfassen,
- mindestens einen Stabilisierungsdetektor zur Ermittlung einer Bewegung der ersten Bildstabilisierungseinheit und/oder der zweiten Bildstabilisierungseinheit, oder
- mindestens einen ersten Stabilisierungsdetektor zur Ermittlung einer Bewegung der ersten Bildstabilisierungseinheit und mindestens einen zweiten Stabilisierungsdetektor zur Ermittlung einer Bewegung der zweiten Bildstabilisierungseinheit.

Bei einem weiteren Ausführungsbeispiel des erfindungsgemäßen optischen Systems ist es zusätzlich vorgesehen, dass in einem ersten Gehäuseteil ein erster Bewegungsdetektor und ein zweiter Bewegungsdetektor angeordnet sind. In einem zweiten Gehäuseteil ist wiederum ein dritter Geschwindigkeitsdetektor angeordnet. Bei einer wieder weiteren Ausführungsform des erfindungsgemäßen optischen Systems ist es vorgesehen, dass der erste Bewegungsdetektor, der zweite Bewegungsdetektor, der dritte Bewegungsdetektor und/oder der vierte Bewegungsdetektor nur in einem der beiden Gehäuse angeordnet sind.

Bei einem weiteren Ausführungsbeispiel des erfindungsgemäßen optischen Systems ist es zusätzlich vorgesehen, dass das erste Gehäuse als Tubus ausgebildet ist. Zusätzlich ist es vorgesehen, dass das zweite Gehäuse als Tubus ausgebildet ist.

Bei einer wiederum weiteren Ausführungsform des erfindungsgemäßen optischen Systems ist das optische System als Fernglas oder als Fernrohr ausgebildet.

Ein nicht erfindungsgemäßes optisches System zur Abbildung eines Objekts kann mindestens eines der vorgenannten oder nachstehenden Merkmale oder eine Kombination von mindestens zwei der vorgenannten oder nachstehenden Merkmale aufweisen. Das nicht erfindungsgemäße optische System weist mindestens ein erstes Objektiv, mindestens eine erste Bildebene, mindestens ein zweites Objektiv und mindestens eine zweite Bildebene auf. Das erste Objektiv und die erste Bildebene sind in einem ersten Gehäuse, beispielsweise einem ersten Tubus, angeordnet. Ferner sind das zweite Objektiv und die zweite Bildebene in einem zweiten Gehäuse, beispielsweise einem zweiten Tubus, angeordnet. Darüber hinaus ist es vorgesehen, dass mindestens eine erste Bildstabilisierungseinheit in dem ersten Gehäuse angeordnet ist und dass mindestens eine zweite Bildstabilisierungseinheit in dem zweiten Gehäuse angeordnet ist. Zur Bewegung der ersten Bildstabilisierungseinheit ist mindestens eine erste Antriebseinheit vorgesehen. Ferner ist zur Bewegung der zweiten Bildstabilisierungseinheit mindestens eine zweite Antriebseinheit vorgesehen. Insbesondere ist es vorgesehen, dass die erste Antriebseinheit in dem ersten Gehäuse angeordnet ist und dass die zweite Antriebseinheit in dem zweiten Gehäuse angeordnet ist. Beispielsweise ist die erste Antriebseinheit als Piezo-Aktor ausgebildet und/oder beispielsweise ist die zweite Antriebseinheit als Piezo-Aktor ausgebildet. Die Anordnung der einzelnen Bildstabilisierungseinheiten in jeweils einem Gehäuse ermöglicht es, das Gewicht der Bildstabilisierungseinheiten im Vergleich zum Stand der Technik deutlich zu reduzieren. Hierdurch wird es ermöglicht, Antriebseinheiten wie Piezo-Aktoren, beispielsweise Piezo-Biegeaktoren, zur Verstellung der Bildstabilisierungseinheiten zu verwenden.

Bei einem weiteren Ausführungsbeispiel jedes oben und weiter unten beschriebenen optischen Systems ist es zusätzlich vorgesehen, den Energieverbrauch der Antriebseinheiten zu steuern und derart zu begrenzen, dass nur die in einer gegebenen Situation tatsächlich benötigte Energie verbraucht werden wird. Insbesondere ist es vorgesehen, eine Bildstabilisierung nur dann vorzunehmen, wenn ein Benutzer das optische System tatsächlich auch benutzt. Wird erkannt, dass ein Benutzer das optische System, beispielsweise ein Fernglas, nicht benutzt, dann wird eine Bildstabilisierung nicht durchgeführt. Bei einem weiteren Ausführungsbeispiel des optischen Systems ist es zusätzlich vorgesehen, dass der Umfang und die Güte der Bildstabilisierung an die zur Verfügung stehende Energie angepasst werden. Bei diesem Ausführungsbeispiel ist es demnach vorgesehen, dass die Qualität der Bildstabilisierung verringert wird, wenn nur noch geringe Energie zur Verfügung steht. Bei einem wiederum weiteren Ausführungsbeispiel des optischen Systems ist es zusätzlich vorgesehen, dass die Qualität der Bildstabilisierung an die Beobachtungssituation angepasst ist. Beispielsweise ist eine sehr hochqualitative Bildstabilisierung bei einer Benutzung des optischen Systems in der Dunkelheit oder bei einer sehr kleinen Vergrößerung nicht unbedingt notwendig. Beispielsweise kann in diesen beiden Fällen eine Bildstabilisierung abgeschaltet werden.

Zur Einschaltung oder Abschaltung der Bildstabilisierung ist es bei einem Ausführungsbeispiel des optischen Systems zusätzlich vorgesehen, dass das optische System mindestens eine Messeinrichtung zur Messung der Spannung einer Spannungsversorgungseinheit zur Versorgung der ersten Antriebseinheit und mindestens eine Steuereinheit aufweist, wobei die Steuereinheit zu mindestens einer der nachfolgenden Eigenschaften ausgebildet ist: Begrenzung eines Drehwinkels der ersten Bildstabilisierungseinheit, Bewegen der ersten Bildstabilisierungseinheit bei Überschreiten einer ersten Grenzfrequenz und/oder Unterschreiten einer zweiten Grenzfrequenz, oder Begrenzung einer Bewegungsgeschwindigkeit der ersten Bildstabilisierungseinheit. Bei einem weiteren Ausführungsbeispiel des optischen Systems ist es zusätzlich vorgesehen, dass das optische System mindestens eine Messeinrichtung zur Messung der Spannung einer Spannungsversorgungseinheit zur Versorgung der zweiten Antriebseinheit und mindestens eine Steuereinheit aufweist, wobei die Steuereinheit zu mindestens einer der nachfolgenden Eigenschaften ausgebildet ist: Begrenzung eines Drehwinkels der zweiten Bildstabilisierungseinheit, Bewegen der zweiten Bildstabilisierungseinheit bei Überschreiten einer ersten Grenzfrequenz und/oder Unterschreiten einer zweiten Grenzfrequenz, oder Begrenzung einer Bewegungsgeschwindigkeit der zweiten Bildstabilisierungseinheit. Die beiden hier erläuterten Ausführungsbeispiele beruhen auf den nachfolgend dargestellten Überlegungen.

Sofern erkannt wird, dass die Spannungsversorgungseinheit nur noch eine geringe Energie zur Verfügung stellen kann, wird beispielsweise der maximale Drehwinkel, um den die erste Bildstabilisierungseinheit und/oder die zweite Bildstabilisierungseinheit gedreht werden, begrenzt. Hierdurch werden die Bewegungen der beiden vorgenannten Bildstabilisierungseinheiten kürzer und/oder langsamer. Hierdurch wird der Energieverbrauch gesenkt.

Bei einer weiteren Ausführungsform ist es zusätzlich vorgesehen, dass niederfrequente und/oder hochfrequente Anteile einer Bewegung des optischen Systems (beispielsweise eine Zitterbewegung) nicht mehr bei der Bildstabilisierung berücksichtigt werden. Niederfrequente Anteile einer Bewegung wirken sich kaum auf eine Detailerkennbarkeit aus. Bei den niederfrequenten Anteilen handelt es sich um relativ große Bewegungen, so dass die Leistungsaufnahme der Antriebseinheiten verringert wird, wenn die niederfrequenten Anteile nicht mehr bei der Bildstabilisierung berücksichtigt werden. Hinsichtlich der hochfrequenten Anteile haben Überlegungen folgendes ergeben. Die Leistung, die für eine Bewegung einer Bildstabilisierungseinheit benötigt wird, steigt quadratisch mit der Frequenz und linear mit der Amplitude der Bewegung an. Die Amplitude einer Drehzitterbewegung sinkt linear mit der Frequenz. Demnach steigt die Leistungsaufnahme der Antriebseinheiten linear mit der Frequenz der Drehzitterbewegung an. Somit haben die hochfrequenten Anteile einen hohen Energieverbrauch bei der Bildstabilisierung zur Folge. Wenn demnach auf diese hochfrequenten Anteile verzichtet wird, sinkt der Energieverbrauch.

Bei einem wiederum weiteren Ausführungsbeispiel des optischen Systems ist es zusätzlich vorgesehen, dass generell die Amplitude einer Bewegung einer der Bildstabilisierungseinheiten verringert wird, wenn die Spannungsversorgungseinheit nur eine gewisse Energie zur Verfügung stellen kann. Zusätzlich ist es vorgesehen, dass die Geschwindigkeit, mit der mindestens eine der Bildstabilisierungseinheiten bewegt wird, auf eine maximale Geschwindigkeit begrenzt wird. Hierdurch sinkt die Leistungsaufnahme der Antriebseinheit der jeweiligen Bildstabilisierungseinheit.

Bei einem weiteren Ausführungsbeispiel des optischen Systems ist es zusätzlich vorgesehen, dass das optische System mindestens eines der Merkmale aufweist, die nachfolgend erläutert werden.

So ist es bei einem Ausführungsbeispiel des erfindungsgemäßen optischen Systems zusätzlich vorgesehen, dass das optische System mindestens einen Helligkeitssensor zur Ermittlung der Umgebungshelligkeit und mindestens eine Systemsteuereinheit aufweist. Bei Dunkelheit ist die Wahrnehmung eines Benutzers des optischen Systems nicht mehr sehr empfindlich. Bewegungen des optischen Systems, insbesondere aufgrund von Drehzitterbewegungen, werden bei Dunkelheit nicht mehr derart wahrgenommen, als dass sie als störend empfunden werden. Bei Dunkelheit schaltet die Systemsteuereinheit beispielsweise auf einen Nachtmodus (Bildstabilisierung mit geringer Güte) oder schaltet die Bildstabilisierung vollständig ab. Alternativ hierzu ist es vorgesehen, den Drehwinkel der ersten Bildstabilisierungseinheit und/oder der zweiten Bildstabilisierungseinheit zu begrenzen, die erste Bildstabilisierungseinheit oder die zweite Bildstabilisierungseinheit nur bei Überschreiten einer ersten Grenzfrequenz und/oder Unterschreiten einer zweiten Grenzfrequenz zu bewegen oder die Bewegungsgeschwindigkeit der ersten Bildstabilisierungseinheit oder der zweiten Bildstabilisierungseinheit zu begrenzen.

Bei einer weiteren Ausführungsform des optischen Systems ist das optische System zusätzlich mit mindestens einem Lagesensor zur Ermittlung einer Neigung des optischen Systems und mit mindestens einer Systemsteuereinheit zum Abschalten einer Bildstabilisierung bei dem optischen System versehen. Diese Ausführungsform geht von dem Gedanken aus, dass Beobachtungen eines Objekts mittels des optischen Systems in der Regel derart erfolgen, dass das optische System nahezu horizontal ausgerichtet ist. Eine Abweichung der optischen Achse(n) des optischen Systems von der Horizontalen erfolgt beispielsweise, wenn das optische System mit einem Band um den Hals eines Benutzers getragen wird. Wenn die optische Achse des optischen Systems in einem Winkel von beispielsweise 70° bis 100° zur Horizontalen ausgerichtet ist, kann davon ausgegangen werden, dass das optische System nicht benutzt wird. Beispielsweise schaltet die Systemsteuereinheit dann die Bildstabilisierung ab.

Bei einem wiederum weiteren Ausführungsbeispiel des optischen Systems ist es zusätzlich vorgesehen, dass das optische System mindestens einen Sensor zur Erkennung einer monokularen Anwendung des optischen Systems und mindestens eine Systemsteuereinheit zum Abschalten einer Bildstabilisierung bei dem optischen System aufweist. Dieses Ausführungsbeispiel beruht auf dem Gedanken, dass ein binokulares optisches System auch monokular verwendet werden kann. Beispielsweise geschieht dies durch Anordnen eines sogenannten Optik-Boosters an einem der beiden optischen Teilsysteme. Unter einem Optik-Booster wird insbesondere ein auf ein Okular aufsetzbares, kleines, auch eigenständig verwendbares Fernrohr mit einer kleinen Vergrößerung (beispielsweise 2x bis 4x) verstanden. Dieses wird mittels des Sensors (beispielsweise ein Schalter) erkannt. Die Systemsteuereinheit schaltet dann die Bildstabilisierung des anderen der beiden optischen Teilsysteme ab. Dies spart Energie.

Bei einem noch weiteren Ausführungsbeispiel des optischen Systems ist es zusätzlich vorgesehen, dass mindestens ein Sensor zur Erkennung eines Auges eines Benutzers und mindestens eine Systemsteuereinheit zum Abschalten einer Bildstabilisierung bei dem optischen System vorgesehen sind. Wenn kein Auge sich an dem optischen System befindet, dann ist es auch nicht zwingend notwendig, eine Bildstabilisierung durchzuführen. Als Sensor eignet sich beispielsweise ein Fotosensor zur Messung des Lichts am Okular. Wiederum weitere Ausführungsbeispiele sehen eine Kapazitätsmessung vor.

Bei einem weiteren Ausführungsbeispiel des optischen Systems ist es zusätzlich vorgesehen, dass das optische System mindestens einen Sensor zur Erkennung einer Anordnung einer Objektivschutzkappe und/oder Okularschutzkappe sowie mindestens eine Systemsteuereinheit zum Abschalten einer Bildstabilisierung bei dem optischen System aufweist. Wenn auf dem Objektiv und/oder dem Okular eine Schutzkappe angeordnet ist, kann davon ausgegangen werden, dass das optische System nicht benutzt wird. Die Systemsteuereinheit schaltet dann die Bildstabilisierung ab.

Bei einem wiederum weiteren Ausführungsbeispiel des optischen Systems ist es zusätzlich vorgesehen, dass das optische System mindestens einen Sensor zur Erkennung einer Anordnung einer Hand eines Benutzers und mindestens eine Systemsteuereinheit zum Abschalten einer Bildstabilisierung bei dem optischen System aufweist. Wenn erkannt wird, dass keine Hand das optische System berührt, dann kann davon ausgegangen werden, dass das optische System nicht benutzt wird. Die Systemsteuereinheit schaltet dann die Bildstabilisierung ab. Bei diesem Ausführungsbeispiel wird beispielsweise ein kapazitiver Sensor (Kapazitätsmessung), ein Fotosensor oder ein Drucksensor verwendet.

Bei einem wiederum weiteren Ausführungsbeispiel des optischen Systems ist es zusätzlich vorgesehen, dass das optische System mindestens einen Sensor zur Erkennung eines minimalen Knickwinkels der Knickbrücke und mindestens eine Systemsteuereinheit zum Abschalten einer Bildstabilisierung bei dem optischen System aufweist. Diese Ausführungsform geht von dem Gedanken aus, dass bei einem binokularen optischen System (beispielsweise einem Fernglas) der minimale Knickwinkel dann eingestellt wird, wenn das Fernglas transportiert wird. In diesem Falle schaltet dann die Systemsteuereinheit die Bildstabilisierung ab.

Bei mindestens einem der vorgenannten Ausführungsbeispiele ist die Bildstabilisierung durch die erste Bildstabilisierungseinheit und/oder die zweite Bildstabilisierungseinheit standardmäßig eingeschaltet. Bei wiederum weiteren Ausführungsbeispielen ist es vorgesehen, dass das optische System eine Schalteinheit aufweist (beispielsweise ein Druckknopf), um die Bildstabilisierung ein- oder auszuschalten. Beispielsweise muss die Schalteinheit solange betätigt werden, wie eine Bildstabilisierung gewünscht ist.

Die Erfindung wird nun anhand von Ausführungsbeispielen mittels Figuren näher beschrieben. Dabei zeigen
- Fig. 1A: eine erste schematische Darstellung eines optisches Systems in Form eines Fernglases mit einer Knickbrücke;
- Fig. 1B: eine zweite schematische Darstellung des Fernglases nach Figur 1A;
- Fig. 2A: eine schematische Darstellung eines ersten optischen Teilsystems;
- Fig. 2B: eine dritte schematische Darstellung des Fernglases nach Figur 1A;
- Fig. 2C: eine erste Schnittdarstellung des Fernglases entlang der Linie A-A gemäß Figur 2B;
- Fig. 2D: eine zweite Schnittdarstellung des Fernglases entlang der Linie A-A gemäß Figur 2B;
- Fig. 2E: eine vergrößerte Schnittdarstellung auf eine Bildstabilisierungseinheit des Fernglases gemäß den Figuren 2C und 2D;
- Fig. 3A bis 3C: schematische Darstellungen eines Piezo-Biegeaktors;
- Fig. 4A bis 4F: schematische Darstellung von Anordnungen eines Piezo-Biegeaktors an eine Bildstabilisierungseinheit;
- Fig. 5A und 5B: schematische Darstellungen einer Anordnung einer Antriebseinheit an eine Bildstabilisierungseinheit;
- Fig. 6: eine schematische Darstellung eines ersten Blockschaltbilds von Steuer- und Messeinheiten;
- Fig. 7: eine schematische Darstellung eines zweiten Blockschaltbilds von Steuer- und Messeinheiten;
- Fig. 8: eine schematische Darstellung eines dritten Blockschaltbilds von Steuer- und Messeinheiten; und
- Fig. 9: eine vierte schematische Darstellung des Fernglases nach Figur 1A.

Die Erfindung wird nachfolgend anhand eines optischen Systems in Form eines binokularen Fernglases 1 besprochen (nachfolgend nur Fernglas genannt).

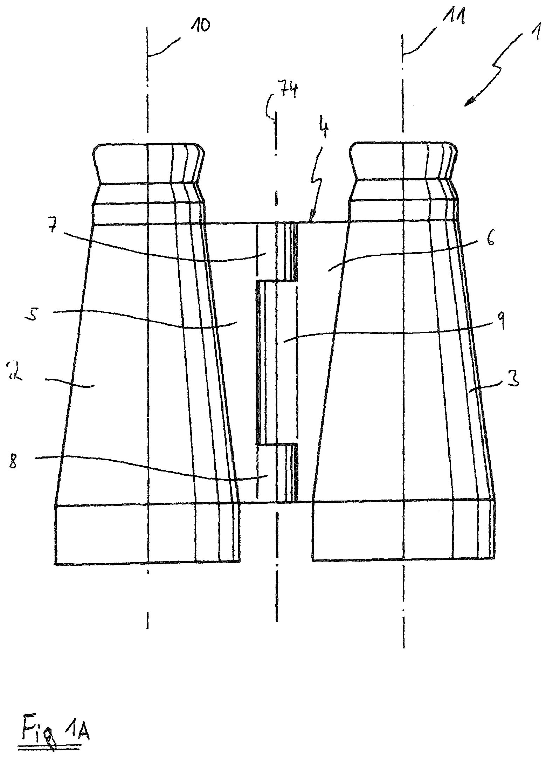

**Figur 1A** zeigt eine erste schematische Darstellung des Fernglases 1, welches ein tubusförmiges erstes Gehäuseteil 2 und ein tubusförmiges zweites Gehäuseteil 3 aufweist. Durch das erste Gehäuseteil 2 verläuft eine erste optische Achse 10.

Hingegen verläuft durch das zweite Gehäuseteil 3 eine zweite optische Achse 11. Das erste Gehäuseteil 2 ist mit dem zweiten Gehäuseteil 3 über eine Knickbrücke 4 miteinander verbunden. Die Knickbrücke 4 weist ein erstes Scharnierteil 5 auf, welches an dem ersten Gehäuseteil 2 angeformt ist. Ferner weist die Knickbrücke 4 ein zweites Scharnierteil 6 auf, welches an dem zweiten Gehäuseteil 3 angeordnet ist. Das erste Scharnierteil 5 weist ein erstes Aufnahmeteil 7 und ein zweites Aufnahmeteil 8 auf, zwischen denen ein drittes Aufnahmeteil 9 des zweiten Scharnierteils 6 angeordnet ist. Durch das erste Aufnahmeteil 7, das zweite Aufnahmeteil 8 sowie das dritte Aufnahmeteil 9 verläuft ein Achsbolzen (nicht dargestellt), sodass die relative Position des ersten Gehäuseteils 2 und des zweiten Gehäuseteils 3 um eine Gelenkachse 74 zueinander eingestellt werden kann. Auf diese Weise ist es möglich, das erste Gehäuseteil 2 und das zweite Gehäuseteil 3 auf die Pupillendistanz eines Benutzers einzustellen, sodass zum einen das erste Gehäuseteil 2 an dem einen der beiden Augen des Benutzers angeordnet ist und so dass zum anderen das zweite Gehäuseteil 3 an dem anderen der beiden Augen des Benutzers angeordnet ist.

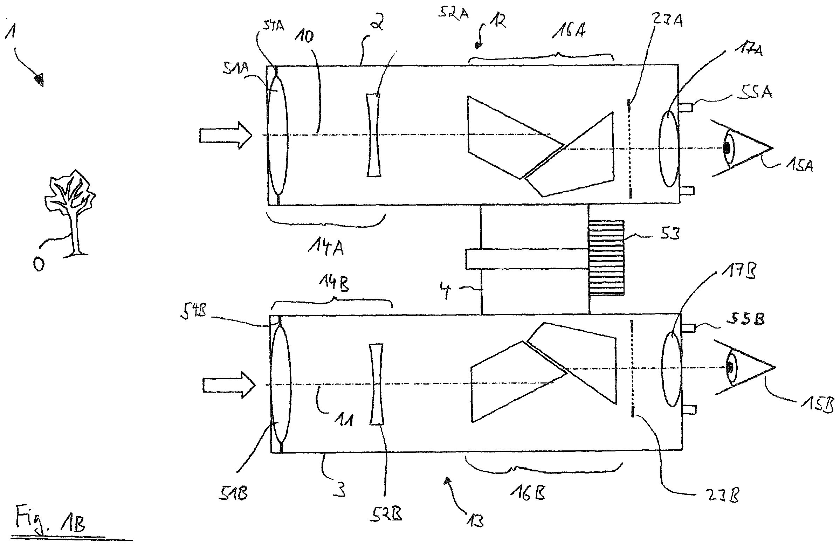

**Figur 1B** zeigt eine weitere Darstellung des Fernglases 1. Das erste Gehäuseteil 2 weist ein erstes optisches Teilsystem 12 auf. Das erste optische Teilsystem 12 ist mit einem ersten Objektiv 14A, mit einer als erstes Prismensystem ausgebildeten ersten Bildstabilisierungseinheit 16A und einem ersten Okular 17A versehen. An dem ersten Okular 17A kann ein erstes Auge 15A eines Benutzers zur Beobachtung eines Objekts O angeordnet werden. Die erste optische Achse 10 des ersten optischen Teilsystems 12 wird aufgrund des ersten Prismensystems 16A (erste Bildstabilisierungseinheit 16A) lateral etwas versetzt, so dass es zu einer stufigen Ausbildung der ersten optischen Achse 10 kommt.

Das erste Objektiv 14A besteht bei diesem Ausführungsbeispiel aus einer ersten Fronteinheit 51A und einer ersten Fokussiereinheit 52A. Weitere Ausführungsformen des ersten Objektivs 14A sehen eine unterschiedliche Anzahl an einzelnen Linsen oder aus Linsen bestehenden Kittgliedern vor. Zum Zwecke einer Fokussierung des durch Fernglas 1 betrachteten Objekts O kann entweder das erste Okular 17A oder die erste Fokussiereinheit 52A axial entlang der ersten optischen Achse 10 verschoben werden. Bei einer weiteren Ausführungsform wird die erste Fronteinheit 51A oder sogar das vollständige erste Objektiv 14A entlang der ersten optische Achse 10 verschoben. Bei einer weiteren Ausführungsform werden die erste Fronteinheit 51A und die erste Fokussiereinheit 52A relativ zueinander verschoben.

Das zweite Gehäuseteil 3 weist ein zweites optisches Teilsystem 13 auf. Das zweite optische Teilsystem 13 ist mit einem zweiten Objektiv 14B, mit einer als Prismensystem ausgebildeten zweiten Bildstabilisierungseinheit 16B und mit einem zweiten Okular 17B versehen. An dem zweiten Okular 17B kann ein zweites Auge 15B des Benutzers zur Beobachtung des Objekts O angeordnet werden. Die zweite optische Achse 11 des zweiten optischen Teilsystems 13 wird aufgrund der zweiten Bildstabilisierungseinheit 16B (Prismensystem) lateral etwas versetzt, so dass es zu einer stufigen Ausbildung der zweiten optischen Achse 11 kommt.

Das zweite Objektiv 14B besteht bei diesem Ausführungsbeispiel aus einer zweiten Fronteinheit 51B und einer zweiten Fokussiereinheit 52B. Weitere Ausführungsformen des zweiten Objektivs 14B sehen eine unterschiedliche Anzahl an einzelnen Linsen oder aus Linsen bestehenden Kittgliedern vor. Zum Zwecke einer Fokussierung des durch Fernglas 1 betrachteten Objekts O kann entweder das zweite Okular 17B oder die zweite Fokussiereinheit 52B axial entlang der zweiten optischen Achse 11 verschoben werden. Bei einer weiteren Ausführungsform wird die zweite Fronteinheit 51B oder sogar das vollständige zweite Objektiv 14B entlang der zweiten optische Achse 11 verschoben. Bei einer weiteren Ausführungsform werden die zweite Fronteinheit 51B und die zweite Fokussiereinheit 52B relativ zueinander verschoben.

Bei beiden oben dargestellten optischen Teilsystemen 12,13 ist die Strahlrichtung des in die optischen Teilsysteme 12, 13 einfallende Lichtstrahlen wie folgt: Objekt O - Objektiv 14A, 14B- Bildstabilisierungseinheit (Prismensystem) 16A, 16B - Okular 17A, 17B - Auge 15A, 15B.

Zum Fokussieren ist bei dem hier dargestellten Ausführungsbeispiel an der Knickbrücke 4 ein Drehknopf 53 angeordnet, mit dem die erste Fokussiereinheit 52A und die zweite Fokussiereinheit 52B gemeinsam entlang der beiden optischen Achsen 10 und 11 verschoben werden können. Bei einer weiteren Ausführungsform ist es vorgesehen, das erste Objektiv 14A und das zweite Objektiv 14B (oder zumindest Einheiten des ersten Objektivs 14A und des zweiten Objektivs 14B) relativ zueinander zu verstellen.

Sowohl das erste Objektiv 14A als auch das zweite Objektiv 14B erzeugen bei dem hier dargestellten Ausführungsbeispiel ein reales, relativ zum betrachteten Objekt O auf dem Kopf stehendes Bild in einer dem jeweiligen Objektiv 14A, 14B zugeordneten Bildebene. Das dem ersten Objektiv 14A zugeordnete erste Prismensystem 16A (erste Bildstabilisierungseinheit) sowie das dem zweiten Objektiv 14B zugeordnete zweite Prismensystem 16B (zweite Bildstabilisierungseinheit) werden zur Bildaufrichtung verwendet. Somit wird das auf dem Kopf stehende Bild wieder aufgerichtet und in einer neuen Bildebene, der linken Zwischenbildebene 23A oder der rechten Zwischenbildebene 23B, abgebildet. Das erste Prismensystem 16A (erste Bildstabilisierungseinheit) und das zweite Prismensystem 16B (zweite Bildstabilisierungseinheit) können als Abbe-König-Prismensystem, Schmidt-Pechan-Prismensystem, Uppendahl-Prismensystem, Porro-Prismensystem oder einer anderen Prismensystem-Variante aufgebaut sein. In der linken Zwischenbildebene 23A ist beispielsweise eine das Sehfeld scharf begrenzende erste Feldblende angeordnet. Ferner kann beispielsweise in der rechten Zwischenbildebene 23B eine das Sehfeld scharf begrenzende zweite Feldblende angeordnet sein.

Das erste Okular 17A wird verwendet, um das Bild der linken Zwischenbildebene 23A in eine beliebige Entfernung, z.B. ins Unendliche oder in eine andere Entfernung, abzubilden. Ferner wird das zweite Okular 17B dazu verwendet, um das Bild der rechten Zwischenbildebene 23B in eine beliebige Entfernung, z.B. ins Unendliche oder in eine andere Entfernung, abzubilden.

Die erste Aperturblende 54A des ersten optischen Teilsystems 12 und die zweite Aperturblende 54B des zweiten optischen Teilsystems 13 können entweder durch eine Fassung eines optischen Elements des entsprechenden optischen Teilsystems 12 , 13, in der Regel durch die Fassung der Linsen der ersten Fronteinheit 51A oder der zweiten Fronteinheit 51B, oder durch eine separate Blende gebildet sein. Sie kann in Strahlrichtung durch das entsprechende optische Teilsystem 12 oder 13 in eine Ebene abgebildet werden, die in Strahlrichtung hinter dem entsprechenden Okular 17A oder 17B liegt und typischerweise 5 bis 25 mm Abstand zu diesem hat. Diese Ebene wird Ebene der Austrittspupille genannt.

Zum Schutz des Benutzers vor seitlich einfallendem Licht können an dem ersten Okular 17A eine ausziehbare, ausdrehbare oder umklappbare erste Augenmuschel 55A und an dem zweiten Okular 17B eine ausziehbare, ausdrehbare oder umklappbare zweite Augenmuschel 55B vorgesehen sein.

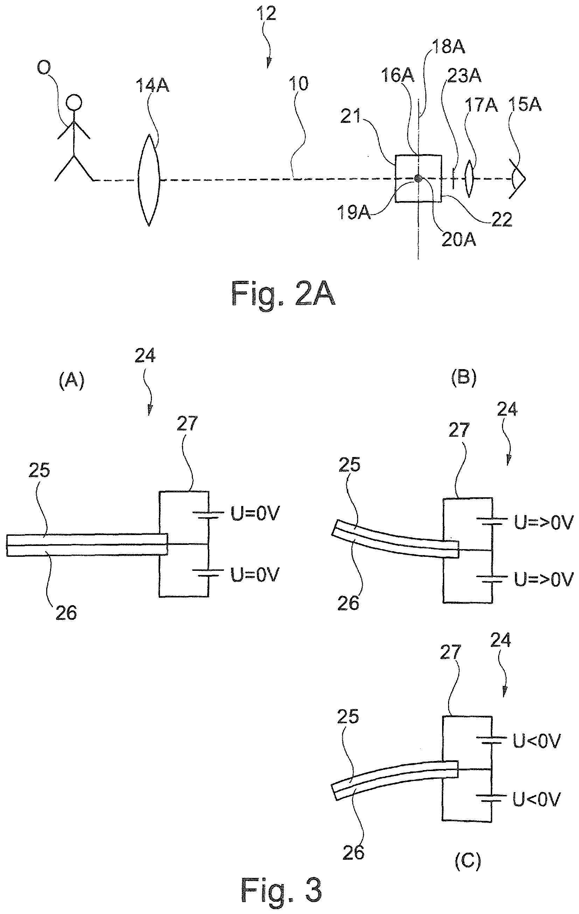

**Figur 2A** zeigt eine schematische Darstellung des ersten optischen Teilsystems 12, das in dem ersten Gehäuseteil 2 angeordnet ist. Das in dem zweiten Gehäuseteil 3 angeordnete zweite optische Teilsystem 13 weist einen identischen Aufbau wie das erste optische Teilsystem 12 auf. Somit gelten die nachfolgenden Ausführungen hinsichtlich des ersten optischen Teilsystems 12 auch für das zweite optische Teilsystem 13.

Wie aus **Figur 2A** ersichtlich, sind entlang der ersten optischen Achse 10 von dem Objekt O in Richtung des ersten Auges 15A des Benutzers das erstes Objektiv 14A, die erste Bildstabilisierungseinheit 16A sowie das erste Okular 17A angeordnet. Bei dem hier dargestellten Ausführungsbeispiel ist die erste Bildstabilisierungseinheit 16A als Prismenumkehrsystem ausgebildet. Alternativ hierzu ist es bei einem weiteren Ausführungsbeispiel vorgesehen, dass die erste Bildstabilisierungseinheit 16A als Linsenumkehrsystem ausgebildet ist. Wie oben genannt, weist das zweite optische Teilsystem 13 einen identischen Aufbau wie das erste optische Teilsystem 12 auf. So ist hier das zweite Prismensystem als zweite Bildstabilisierungseinheit 16B ausgebildet.

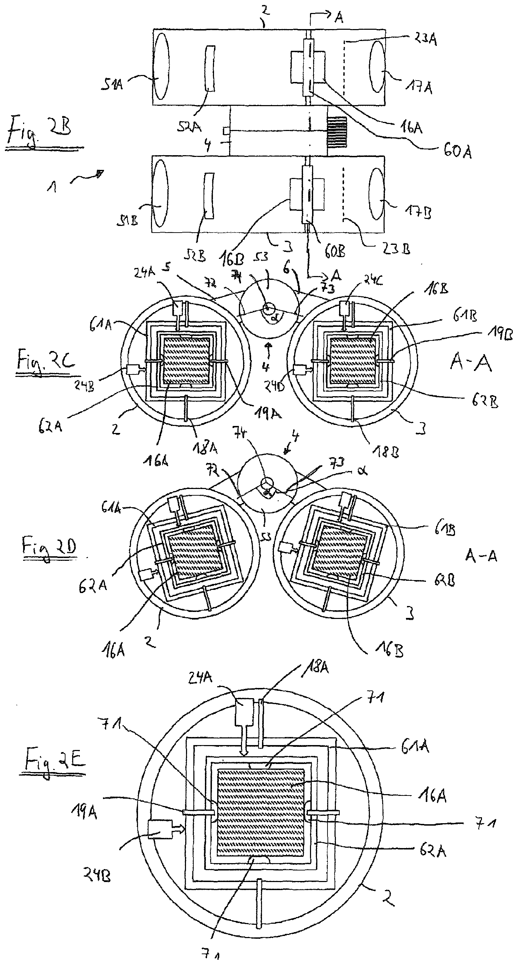

**Figur 2B** zeigt eine weitere schematische Darstellung des Fernglases 1. **Figur 2B** beruht auf der **Figur 1B****.** Gleiche Bauteile sind mit gleichen Bezugszeichen versehen. **Figur 2B** zeigt nun auch die Bewegungsvorrichtungen für die erste Bildstabilisierungseinheit 16A und die zweite Bildstabilisierungseinheit 16B. Die erste Bildstabilisierungseinheit 16A ist in einer ersten Kardanik 60A angeordnet. Die zweite Bildstabilisierungseinheit 16B ist in einer zweiten Kardanik 60B angeordnet.

Die Anordnung der beiden Bildstabilisierungseinheiten 16A und 16B ist in der **Figur 2C** detaillierter dargestellt. Die erste Kardanik 60A weist eine erste äußere Aufhängung 61A auf, die über eine erste Achse 18A an dem ersten Gehäuseteil 2 angeordnet ist. Die erste äußere Aufhängung 61A ist drehbar um die erste Achse 18A angeordnet. Ferner weist die erste Kardanik 60A eine erste innere Aufhängung 62A auf, die über eine zweite Achse 19A an der ersten äußeren Aufhängung 61A drehbar angeordnet ist. Über eine erste Antriebseinheit 24A wird die erste innere Aufhängung 62A um die zweite Achse 19A gedreht. Ferner ist eine zweite Antriebseinheit 24B vorgesehen, mittels welcher die erste äußere Aufhängung 61A um die erste Achse 18A gedreht wird. **Figur 2E** zeigt das Vorgenannte in einer vergrößerten Darstellung. Die erste Bildstabilisierungseinheit 16A wird mittels Klemmhalter 71 an der ersten inneren Aufhängung 62A gehalten.

Die zweite Bildstabilisierungseinheit 16B ist an der zweiten Kardanik 60B angeordnet. Die zweite Kardanik 60B weist eine zweite äußere Aufhängung 61B auf, die über eine dritte Achse 18B an dem zweiten Gehäuseteil 3 angeordnet ist. Die zweite äußere Aufhängung 61B ist drehbar um die dritte Achse 18B angeordnet. Ferner weist die zweite Kardanik 60B eine zweite innere Aufhängung 62B auf, die über eine vierte Achse 19B an der zweiten äußeren Aufhängung 61B drehbar angeordnet. Über eine dritte Antriebseinheit 24C wird die zweite innere Aufhängung 62B um die dritte Achse 19B gedreht. Ferner ist eine vierte Antriebseinheit 24D vorgesehen, mittels welcher die zweite äußere Aufhängung 61B um die dritte Achse 18B gedreht wird.

Wie oben erwähnt, zeigt **Figur 2A** das erste optische Teilsystem 12. Die erste Bildstabilisierungseinheit 16A ist mittels der ersten Kardanik 60A derart angeordnet, dass sie um zwei zueinander rechtwinklig angeordnete Achsen drehbar gelagert ist, nämlich um die erste Achse 18A und um die zweite Achse 19A, welche in die Blattebene hineinragt. Die erste Achse 18A und die zweite Achse 19A schneiden sich in einem ersten Schnittpunkt 20A. Der erste Schnittpunkt 20A ist unterschiedlich zu einem ersten optisch neutralen Punkt auf der ersten optischen Achse 10 angeordnet. Hierzu wird auf die bereits weiter oben gemachten Ausführungen verwiesen.

Die erste Bildstabilisierungseinheit 16A weist eine erste Eintrittsfläche 21 und eine erste Austrittsfläche 22 auf. Die erste Austrittsfläche 22 ist in einem Bereich von 1 mm bis 20 mm beabstandet zur linken Zwischenbildebene 23A angeordnet. Beispielsweise ist die erste Austrittsfläche 22 in einem Bereich von 2 mm bis 15 mm beabstandet zur linken Zwischenbildebene 23A angeordnet. Alternativ hierzu ist vorgesehen, dass die erste Austrittsfläche 22 in einem Bereich von 3 mm bis 12 mm beabstandet zur linken Zwischenbildebene 23A angeordnet ist.

Wie oben bereits erwähnt, geltend die vorstehend und nachstehend aufgeführten Anmerkungen hinsichtlich des ersten optischen Teilsystems 12 für das zweite optische Teilsystem 13 entsprechend.

Mit der vorgenannten Anordnung der ersten Austrittsfläche 22 der ersten Bildstabilisierungseinheit 16A zur linken Zwischenildebene 23A wird zum einen erzielt, dass die Qualität des Bildes, welches durch das erste optische Teilsystem 12 erzeugt wird, verbessert wird, da Fertigungstoleranzen, die bei der Herstellung der ersten Bildstabilisierungseinheit 16A in Kauf genommen werden müssen, sich im erzeugten Bild nicht mehr stark auswirken. Zum anderen wird erzielt, dass aufgrund des Strahlenverlaufs die Ausdehnung und das Volumen der ersten Bildstabilisierungseinheit 16A im Vergleich zum Stand der Technik kleiner ausfallen können. Dies bedeutet, dass die Masse der ersten Bildstabilisierungseinheit 16A geringer als bei dem Stand der Technik sein kann. Auf diese Weise wird das Trägheitsmoment der ersten Bildstabilisierungseinheit 16A derart verringert, dass man mit einer relativ geringen Kraft die Verstellung der ersten Bildstabilisierungseinheit 16A bewirken kann. Das geringere Volumen, die geringere Ausdehnung sowie die Möglichkeit, Antriebseinheiten zu verwenden, die eine geringe Kraft zur Verstellung der ersten Bildstabilisierungseinheit 16A zur Verfügung stellen, ermöglichen, dass das erste Gehäuseteil 2 kleiner als die im Stand der Technik verwendeten Gehäuseteile ausgebildet werden kann. Somit wird ein formschönes, den Benutzer an ein normales Fernglas erinnerndes Gehäuse bereitgestellt, das einen ästhetisch schöneren Eindruck als der bekannte Stand der Technik erweckt. Somit wird ein für viele Benutzer schöner ästhetischer Eindruck erzielt. Es wird auch die Ausbildung des Fernglases 1 in zwei Tuben (nämlich einem dem ersten Gehäuseteil 2 entsprechenden ersten Tubus und einem dem zweiten Gehäuseteil 3 entsprechenden zweiten Tubus) ermöglicht, was der für einen Nutzer gewohnten Aufteilung eines Fernglases entspricht und was die Einstellung des Augenabstandes wesentlich vereinfacht. Ferner ermöglicht die Verwendung von zwei Bildstabilisierungseinheiten (nämlich die erste Bildstabilisierungseinheit 16A im ersten Gehäuseteil 2 und die zweite Bildstabilisierungseinheit 16B im zweiten Gehäuseteil 3) eine im Vergleich zum Stand der Technik deutliche Reduktion des Trägheitsmoments der beiden Bildstabilisierungseinheiten, so dass Piezo-Aktoren zum Einsatz kommen können.

Die **Figuren 3A** - **3C** zeigen schematische Darstellungen einer Antriebseinheit 24 in Form eines Piezo-Biegeaktors, wobei unter einem Aktor ein Stellelement verstanden wird, das eine Kraft oder eine Bewegung erzeugen kann. In der Literatur wird ein solches Stellelement oft auch als Aktuator bezeichnet. Die erste Antriebseinheit 24A, die zweite Antriebseinheit 24B, die dritte Antriebseinheit 24C und die vierte Antriebseinheit 24D sind beispielsweise identisch zu der Antriebseinheit 24 aufgebaut.

Die **Figur 3A** zeigt eine schematische Darstellung der Antriebseinheit 24. Die Antriebseinheit 24 weist eine erste Piezokeramik 25 und eine zweite Piezokeramik 26 auf, die aufeinander angeordnet sind. Über eine Spannungseinheit 27 kann sowohl die erste Piezokeramik 25 als auch die zweite Piezokeramik 26 mit einer Spannung versorgt werden. Mit anderen Worten ausgedrückt wird an der ersten Piezokeramik 25 eine erste Spannung angelegt, und an der zweiten Piezokeramik 26 wird eine zweite Spannung angelegt. Die beiden vorgenannten Spannungen an der ersten Piezokeramik 25 und an der zweiten Piezokeramik 26 werden gegenpolig geschaltet, sodass beispielsweise zum einen sich die erste Piezokeramik 25 ausdehnt und zum anderen sich die zweite Piezokeramik 26 zusammenzieht. Hierdurch verbiegt sich die Gesamtanordnung der ersten Piezokeramik 25 und der zweiten Piezokeramik 26, wie in den **Figuren 3B und 3C** dargestellt. Diese Bewegungen werden nun genutzt, um die erste Bildstabilisierungseinheit 16A oder die zweite Bildstabilisierungseinheit 16B zu bewegen, wie nachfolgend näher erläutert wird.

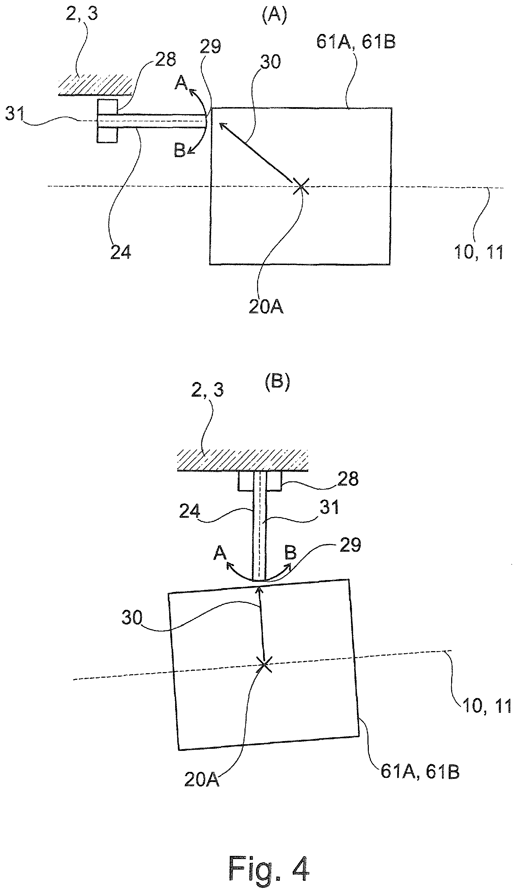

Die **Figuren 4A** - **4F** zeigen schematische Darstellungen von Anordnungen der Antriebseinheit 24 gemäß den **Figuren 3A** - **3C** an der ersten Bildstabilisierungseinheit 16A oder der zweiten Bildstabilisierungseinheit 16B.

Nachfolgend wird nun auf das Ausführungsbeispiel gemäß der **Figur 4A** eingegangen. Wie oben erwähnt, weist die Antriebseinheit 24 (also der Piezo-Biegeaktor) eine Anordnung gebildet aus der ersten Piezokeramik und der zweiten Piezokeramik auf. Diese Anordnung weist ein erstes Ende und ein zweites Ende auf. Das erste Ende der Anordnung ist an dem ersten Gehäuseteil 2 oder an dem zweiten Gehäuseteil 3 mittels einer Fassung 28 fest angeordnet. Das zweite Ende der Anordnung ist mittels eines Loslagers 29 mit der ersten Kardanik 60A der ersten Bildstabilisierungseinheit 16A oder mit der zweiten Kardanik 60B der zweiten Bildstabilisierungseinheit 16B verbunden. Genauer gesagt ist das zweite Ende der Anordnung beweglich an einem Punkt der ersten äußeren Aufhängung 61A oder der zweiten äußeren Aufhängung 61B angeordnet. Dieser Punkt ist durchaus nicht nur im mathematischen Sinne zu verstehen, sondern kann durchaus auch eine Fläche oder ein Volumen sein. Der Punkt bildet mit der vorgesehenen Drehachse (also beispielsweise die erste Achse oder die zweite Achse) einen Hebelarm 30. Darüber hinaus weist die Anordnung eine Längsachse 31 auf, die parallel zur ersten optischen Achse 10 oder zur zweiten optischen Achse 11 angeordnet ist. Die Erfindung ist auf das hier beschriebene Ausführungsbeispiel einer Anordnung der Antriebseinheit 24 nicht eingeschränkt. Vielmehr kann jede geeignete Anordnung der Antriebseinheit 24 an der ersten Kardanik 60A der ersten Bildstabilisierungseinheit 16A oder der zweiten Kardanik 60B der zweiten Bildstabilisierungseinheit 16B verwendet werden, insbesondere in Form der weiter unten noch näher beschriebenen Ausführungsbeispiele. Zu einem dieser Ausführungsbeispiele zählt insbesondere, dass alternativ vorgesehen sein kann, dass die Antriebseinheit 24 mit einem der Enden der Anordnung fest an der ersten Kardanik 60A der ersten Bildstabilisierungseinheit 16A oder an der zweiten Kardanik 60B der zweiten Bildstabilisierungseinheit 16B und mit dem anderen der Enden der Anordnung lose am ersten Gehäuseteil 2 oder am zweiten Gehäuseteil 3 angeordnet ist.

Das Loslager 29 ist derart gestaltet, dass eine Bewegung der Antriebseinheit 24 in eine erste Richtung (Pfeilrichtung A) oder in eine zweite Richtung (Pfeilrichtung B) möglich ist. Das am Loslager 29 angeordnete Ende der Anordnung der Antriebseinheit 24 sollte dabei derart ausgestaltet sein, dass eine möglichst spielarme Fassung der Antriebseinheit 24 an der ersten Kardanik 60A der ersten Bildstabilisierungseinheit 16Aoder der zweiten Kardanik 60B der zweiten Bildstabilisierungseinheit 16B gegeben ist. Auf diese Weise ist eine besonders genaue Ansteuerung der Bewegung der ersten Bildstabilisierungseinheit 16A oder der zweiten Bildstabilisierungseinheit 16B möglich.

Das Ausführungsbeispiel gemäß der **Figur 4B** basiert auf dem Ausführungsbeispiel gemäß der **Figur 4A****.** Gleiche Bauteile sind daher mit gleichen Bezugszeichen versehen. Das Ausführungsbeispiel gemäß der **Figur 4B** unterschiedet sich vom Ausführungsbeispiel der **Figur 4A** nur dadurch, dass die Längsachse 31 der Antriebseinheit 24 senkrecht zur ersten optischen Achse 10 oder der zweiten optischen Achse 11 angeordnet ist.

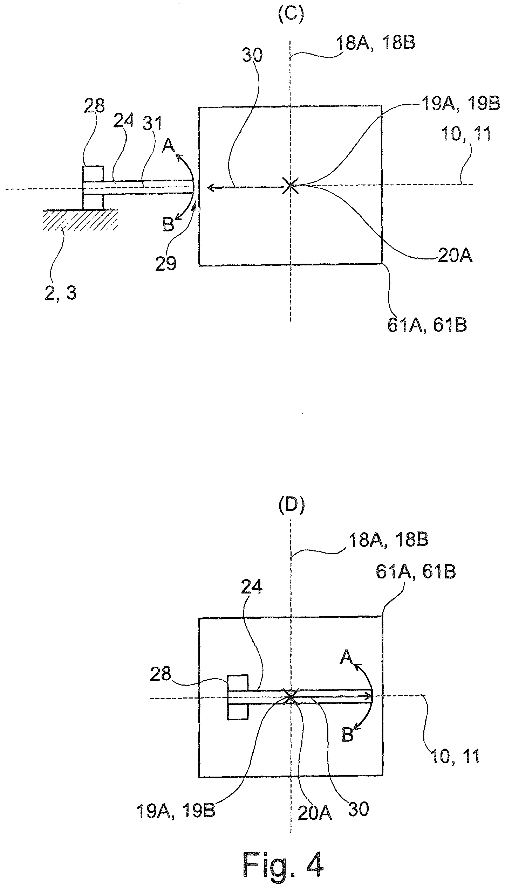

Das Ausführungsbeispiel gemäß der **Figur 4C** basiert auf dem Ausführungsbeispiel der **Figur 4A****.** Gleiche Baueinheiten sind daher mit gleichen Bezugszeichen versehen. Im Unterschied zum Ausführungsbeispiel der **Figur 4A** weist das Ausführungsbeispiel der **Figur 4C** den Unterschied auf, dass die Längsachse 31 der Antriebseinheit 24 entlang der ersten optischen Achse 10 oder der zweiten optischen Achse 11 verläuft.

Das weitere Ausführungsbeispiel gemäß der **Figur 4D** basiert auf dem Ausführungsbeispiel der **Figur 4C****.** Gleiche Bauteile sind daher mit gleichen Bezugszeichen versehen. Das Ausführungsbeispiel der **Figur 4D** unterscheidet sich vom Ausführungsbeispiel der **Figur 4C** nur dadurch, dass die Antriebseinheit 24 seitlich zwischen dem ersten Gehäuseteil 2 sowie der ersten äußeren Aufhängung 61A an der ersten Bildstabilisierungseinheit 16A oder zwischen dem zweiten Gehäuseteil 3 sowie der zweiten äußeren Aufhängung 61B an der zweiten Bildstabilisierungseinheit 16B derart angeordnet ist, dass die erste Bildstabilisierungseinheit 16A oder die zweite Bildstabilisierungseinheit 16B die Antriebseinheit 24 überdeckt.

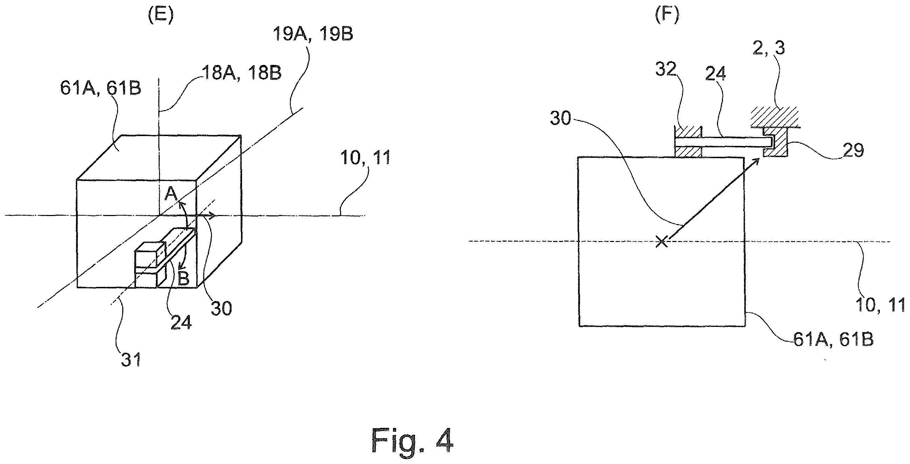

Ein weiteres Ausführungsbeispiel einer möglichen Befestigung der Antriebseinheit 24 an der ersten Bildstabilisierungseinheit 16A oder der zweiten Bildstabilisierungseinheit 16B ist in der **Figur 4E** dargestellt. Das Ausführungsbeispiel gemäß der **Figur 4E** basiert auf dem Ausführungsbeispiel gemäß der **Figur 4A****.** Gleiche Bauteile sind daher mit gleichen Bezugszeichen versehen. Das Ausführungsbeispiel gemäß der **Figur 4E** weist im Unterschied zum Ausführungsbeispiel der **Figur 4A** eine Antriebseinheit 24 auf, deren Längsachse 31 zum einen parallel zur zweiten Achse 19A oder zur vierten Achse 19B angeordnet ist, die gleichzeitig die Drehachse ist. Ferner ist die Längsachse 31 senkrecht zur ersten optischen Achse 10 oder zur zweiten optischen Achse 11 angeordnet.

Ein weiteres Ausführungsbeispiel zeigt die **Figur 4F****.** Das Ausführungsbeispiel der **Figur 4F** beruht ebenfalls auf dem Ausführungsbeispiel der **Figur 4A****.** Gleiche Bauteile sind daher mit gleichen Bezugszeichen versehen. Im Unterschied zum Ausführungsbeispiel gemäß der **Figur 4A** weist das Ausführungsbeispiel der **Figur 4F** ein Festlager 32 auf, an der die Antriebseinheit 24 an der ersten äußeren Aufhängung 61A der ersten Bildstabilisierungseinheit 16A oder an der zweiten äußeren Aufhängung 61B der zweiten Bildstabilisierungseinheit 16B angeordnet ist. Ein weiteres Ende der Antriebseinheit 24 ist in einem Loslager 29 angeordnet, das an dem ersten Gehäuseteil 2 oder dem zweiten Gehäuseteil 3 angeordnet ist.

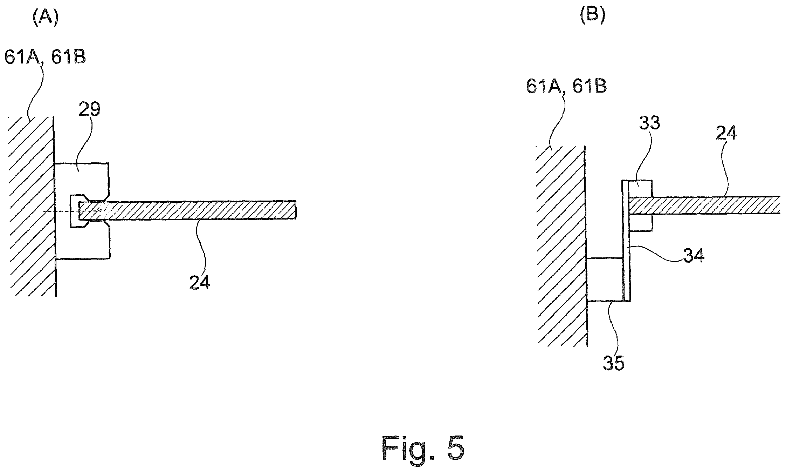

Die **Figuren 5A und 5B** zeigen schematische Darstellungen von Anordnungen der Antriebseinheit 24 an der ersten Bildstabilisierungseinheit 16A oder an der zweiten Bildstabilisierungseinheit 16B. So zeigt **Figur 5A****,** dass das erste Ende der Antriebseinheit 24 in dem Loslager 29 angeordnet ist, welches C-förmig ausgebildet ist und die Anordnung aus den beiden vorgenannten Piezokeramiken aufweist. Das Loslager 29 ist an der ersten äußeren Aufhängung 61A der Bildstabilisierungseinheit 16A oder an der zweiten äußeren Aufhängung 61B der zweiten Bildstabilisierungseinheit 16B angeordnet.

Die **Figur 5B** zeigt die erste äußere Aufhängung 61A der ersten Bildstabilisierungseinheit 16A oder die zweite äußere Aufhängung 61B der zweiten Bildstabilisierungseinheit 16B, an der ein Stutzen 35 angeordnet ist. An dem Stutzen 35 ist wiederum ein Federblech 34 angeordnet, an dem eine Klemmeinheit 33 befestigt ist. An der Klemmeinheit 33 ist das erste Ende der Antriebseinheit 24 fest angeordnet.

Von Vorteil ist bei sämtlichen Ausführungsbeispielen der hier beschriebenen Antriebseinheit 24, dass bei Nicht-Zuführung einer Spannung zu den beiden Piezokeramiken die Antriebseinheit 24 eine bestimmte Position im Raum einnimmt und sich nicht mehr bewegt. Beispielsweise ist diese bestimmte Position die Position, in der eine korrekte binokulare Justierung gewährleistet ist. Hierunter wird eine Ausrichtung derart verstanden, dass die erste optische Achse 10 und die zweite optische Achse 11 parallel zueinander ausgerichtet sind. Die Antriebseinheit 24 ist daher als Haltevorrichtung verwendbar, welche die erste Kardanik 60A der ersten Bildstabilisierungseinheit 16A oder die zweite Kardanik 60B der zweiten Bildstabilisierungseinheit 16B festhält. Die erste Bildstabilisierungseinheit 16A oder die zweite Bildstabilisierungseinheit 16B kann sich daher im Raum nicht mehr bewegen. Die erste Bildstabilisierungseinheit 16Aund/oder die zweite Bildstabilisierungseinheit 16B ist/sind arretiert und kann daher bei einer NichtBenutzung des Fernglases 1 nicht beschädigt werden.

Es wird explizit darauf hingewiesen, dass die Erfindung nicht auf die beschriebene Antriebseinheit 24 in Form eines Piezo-Biegeaktors eingeschränkt ist. Vielmehr können jegliche Arten von Antriebseinheiten verwendet werden, die für die Durchführung einer Bewegung der ersten Bildstabilisierungseinheit 16A oder der zweiten Bildstabilisierungseinheit 16B geeignet sind. Hierunter fallen auch Antriebseinheiten, die nicht auf Basis der Piezo-Technik arbeiten. Weitere geeignete Antriebseinheiten auf Basis der Piezo-Technik sind beispielsweise ein Piezo-Linearaktor, ein Piezo-Wanderwellenaktor oder ein Ultraschallmotor. Piezo-Aktoren sind besonders gut geeignet, da sie über eine große Selbsthemmung verfügen, sodass auf eine zusätzliche Arretierung der ersten Bildstabilisierungseinheit 16A oder der zweiten Bildstabilisierungseinheit 16B verzichtet werden kann. Dies ist weiter oben bereits erläutert worden. Ferner ist ihr Stromverbrauch sehr gering, sodass die Lebensdauer von Batterien, die zur Spannungsversorgung verwendet werden, größer ist.

Es ist vorgesehen, dass die Bewegung der ersten Bildstabilisierungseinheit 16A oder der zweiten Bildstabilisierungseinheit 16B und somit auch die Position der ersten Bildstabilisierungseinheit 16A oderder zweiten Bildstabilisierungseinheit 16B mit mindestens einem Sensor überwacht werden. Beispielsweise sind ein erster Sensor für eine Bewegung relativ zur ersten Achse 18A und ein zweiter Sensor für eine Bewegung relativ zur zweiten Achse 19A vorgesehen. Zusätzlich oder alternativ sind dritter Sensor für eine Bewegung relativ zur dritten Achse 18B und ein vierter Sensor für eine Bewegung relativ zur vierten Achse 19B vorgesehen. Beispielsweise wird als Sensor ein Hallsensor verwendet. Die Erfindung ist aber auf diese Art von Sensoren nicht eingeschränkt. Vielmehr kann jede geeignete Art von Sensor und auch jede geeignete Anzahl von Sensoren verwendet werden. Der vorgenannte Sensor dient der Verbesserung der Qualität der Bildstabilisierung. Es wird explizit darauf hingewiesen, dass die Erfindung auf die Verwendung eines derartigen Sensors nicht eingeschränkt ist. Vielmehr kann bei der Erfindung auch kein Sensor vorgesehen sein.

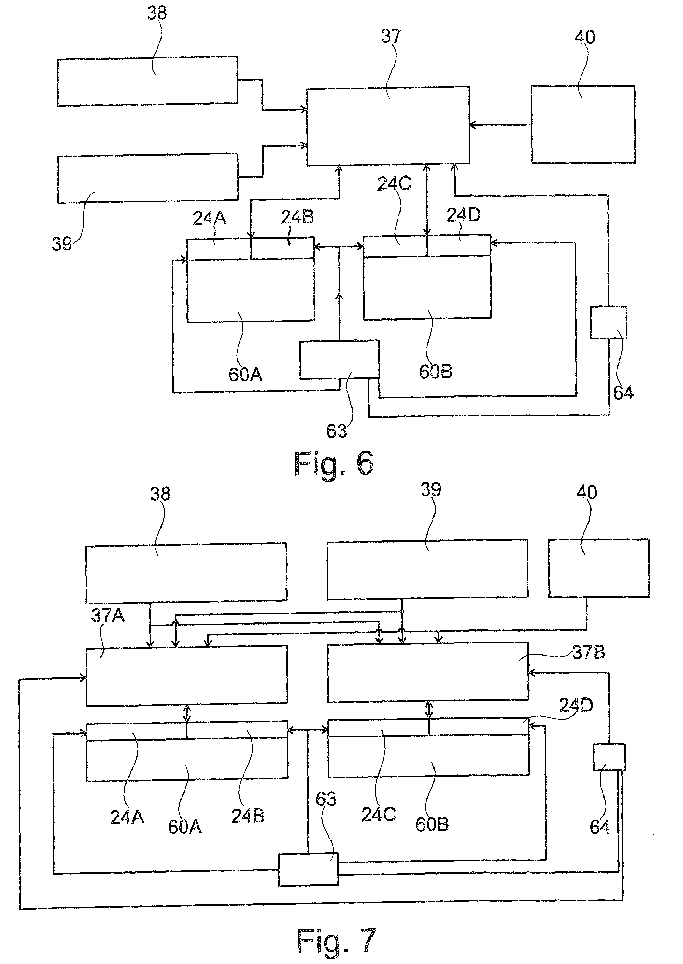

**Figur** 6 zeigt eine schematische Darstellung eines Blockschaltbildes von Steuer- und Messeinheiten für eine Bildstabilisierung im optischen System in Form des Fernglases 1. Die erste Kardanik 60A der ersten Bildstabilisierungseinheit 16A, die erste Antriebseinheit 24A und die zweite Antriebseinheit 24B, welche im ersten Gehäuseteil 2 angeordnet sind, zum einen sowie die zweite Kardanik 60B der zweiten Bildstabilisierungseinheit 16B, die dritte Antriebseinheit 24C und die vierte Antriebseinheit 24D, die im zweiten Gehäuseteil 3 angeordnet sind, zum anderen sind mit einer Steuer- und Kontrolleinheit 37 verbunden (beispielsweise ein Mikrocontroller). Die Steuer- und Kontrolleinheit 37 ist wiederum mit einem ersten Winkelgeschwindigkeitsdetektor 38 und mit einem zweiten Winkelgeschwindigkeitsdetektor 39 verbunden. Der erste Winkelgeschwindigkeitsdetektor 38 dient der Detektion von Bewegungen des Fernglases 1 und ist im ersten Gehäuseteil 2 angeordnet. Auch der zweite Winkelgeschwindigkeitsdetektor 39 dient der Detektion von Bewegungen des Fernglases 1 und ist im ersten Gehäuseteil 2 angeordnet. Bei den vorgenannten Bewegungen handelt es sich beispielsweise um rotatorische und/oder translatorische Zitterbewegungen. Darüber hinaus ist die Steuer- und Kontrolleinheit 37 mit einem Knickbrückensensor 40 verbunden. Die Verwendung des Knickbrückensensors 40 hat folgenden Hintergrund. Die relative Lage der Drehachsen (nämlich zum einen die erste Achse 18A sowie die zweite Achse 19A der ersten Bildstabilisierungseinheit 16A und zum anderen die dritte Achse 18B sowie die vierte Achse 19B der zweiten Bildstabilisierungseinheit 16B) ändert sich bei Einstellung des Augenabstandes über die Knickbrücke 4. Um eine genaue Einstellung der Drehbewegung der ersten Bildstabilisierungseinheit 16A relativ zu der zweiten Bildstabilisierungseinheit 16B zur Bildstabilisierung durch Positionieren der ersten Bildstabilisierungseinheit 16A und der zweiten Bildstabilisierungseinheit 16B erzielen zu können, ist es wünschenswert, die genaue relative Lage der jeweiligen Drehachsen zu kennen. Der Knickbrückensensor 40 ermittelt nun einen sogenannten Knickbrückenwinkel a zwischen einer ersten Scharnierteilachse 72 des ersten Scharnierteils 5 und einer zweiten Scharnierteilachse 73 des zweiten Scharnierteils 6 , wobei die erste Scharnierteilachse 72 und die zweite Scharnierteilachse 73 einen gemeinsamen Schnittpunkt mit der Gelenkachse 74 aufweisen (vgl. **Figuren 2C und 2D**). Dabei ist es beispielsweise vorgesehen, mittels des Knickbrückensensors 40 den tatsächlichen Knickbrückenwinkel a zu bestimmen, was nachfolgend erläutert wird. Beispielsweise kann der Knickbrückenwinkel a in der **Figur 2C****,** in welcher die erste Achse 18A und die dritte Achse 18B parallel zueinander angeordnet sind, bereits 175° betragen. In der **Figur 2D** ist nun eine Ausrichtung der ersten Scharnierteilachse 72 und der zweiten Scharnierteilachse 73 dargestellt, in welcher der Knickbrückenwinkel a beispielsweise 145° beträgt. Dann ist der tatsächliche Knickbrückenwinkel a hinsichtlich der ersten Achse 18A und der dritten Achse 18B die Differenz der beiden gemessenen Knickbrückenwinkel, also 30°. Der auf diese oder ähnliche Weise ermittelte Knickbrückenwinkel ermöglicht nun eine Transformation von Koordinaten eines ersten Koordinatensystems von Baueinheiten des ersten Gehäuseteils 2 in Koordinaten eines zweiten Koordinatensystems von Baueinheiten des zweiten Gehäuseteils 3.

Die Einstellung der Position (Drehposition) der ersten Bildstabilisierungseinheit 16A und der Position (Drehposition) der zweiten Bildstabilisierungseinheit 16B erfolgt beispielsweise wie nachfolgend geschildert. Mittels des ersten Winkelgeschwindigkeitsdetektors 38 und des zweiten Winkelgeschwindigkeitsdetektors 39 wird eine Winkelgeschwindigkeit aufgrund einer Bewegung des Fernglases 1 relativ zur beobachteten Umgebung detektiert. Der erste Winkelgeschwindigkeitsdetektor 38 und der zweite Winkelgeschwindigkeitsdetektor 39 liefern von der Bewegung abhängige Winkelgeschwindigkeitssignale. Mit den Winkelgeschwindigkeitssignalen werden in der Steuer- und Kontrolleinheit 37 Drehwinkel um die Drehachsen der ersten Bildstabilisierungseinheit 16A (beispielsweise die erste Achse 18A und die zweite Achse 19A) sowie Drehwinkel um die Drehachsen der zweiten Bildstabilisierungseinheit 16B (beispielsweise die dritte Achse 18B und die vierte Achse 19B) ermittelt. Die auf diese Weise ermittelten Drehwinkel werden nun in erste Korrekturwinkel umgerechnet, um welche die erste Bildstabilisierungseinheit 16A gedreht werden muss, um im Raum positioniert zu werden. Ferner wird mit den Drehwinkeln ein zweiter Korrekturwinkel berechnet, um welche die zweite Bildstabilisierungseinheit 16B gedreht werden muss, um im Raum "festgesetzt" zu werden. Ferner sollte beachtet werden, dass der Schnittpunkt der Drehachsen mit dem optisch neutralen Punkt des Fernglases 1 nicht übereinstimmt. Dies bedeutet beispielsweise für das erste optische Teilsystem 12 in dem ersten Gehäuseteil 2, dass der erste Schnittpunkt 20A der ersten Achse 18A und der zweiten Achse 19A nicht mit dem optisch neutralen Punkt des Fernglases 1 auf der ersten optischen Achse 10 übereinstimmt. Daher sollte der ermittelte Drehwinkel mit einem vom Fernglas 1 abhängigen Faktor multipliziert werden, um den notwendigen Korrekturwinkel zu erhalten. Dabei sollte die relative Lage von Messachsen der beiden Winkelgeschwindigkeitsdetektoren 38 und 39 sowie der Drehachsen der ersten Bildstabilisierungseinheit 16A sowie der zweiten Bildstabilisierungseinheit 16B beachtet werden. Durch eine geeignete Transformation erhält man den entsprechenden Korrekturwinkel. Beispielsweise ist es vorgesehen, das die Lage der Messachsen der beiden Winkelgeschwindigkeitsdetektoren 38 und 39 der Lage der ersten Achse 18A sowie der zweiten Achse 19A der ersten Bildstabilisierungseinheit 16A entspricht. Mittels des ermittelten Knickbrückenwinkels a können dann die Drehwinkel der ersten Bildstabilisierungseinheit 16A in Drehwinkel der zweiten Bildstabilisierungseinheit 16B transformiert werden.

Wie aus der **Figur 6** auch ersichtlich ist, weist das hier dargestellte Ausführungsbeispiel eine Spannungsversorgungseinheit 63 auf, die mit der ersten Antriebseinheit 24A, mit der zweiten Antriebseinheit 24B, mit der dritten Antriebseinheit 24C und mit der vierten Antriebseinheit 24D zur Versorgung der vorgenannten Antriebseinheiten mit Spannung verbunden ist. Die Spannungsversorgungseinheit 63 ist beispielsweise als (wiederaufladbare) Batterie ausgebildet, deren noch vorhandene Spannung mit einer Spannungsmesseinheit 64 gemessen wird. Die Spannungsmesseinheit ist mit der Steuer- und Kontrolleinheit 37 verbunden.

Die **Figur 7** ist ein Blockschaltbild einer weiteren Ausführungsform von Steuer- und Messeinheiten, das auf dem Ausführungsbeispiel der **Figur 6** basiert. Gleiche Baueinheiten sind daher mit gleichen Bezugszeichen versehen. Im Unterschied zur Ausführungsform gemäß der **Figur 6** weist die Ausführungsform gemäß der **Figur 7** zwei Steuer- und Kontrolleinheiten auf, nämlich eine erste Steuer- und Kontrolleinheit 37A und eine zweite Steuer- und Kontrolleinheit 37B. Die erste Steuer- und Kontrolleinheit 37A ist mit dem ersten Winkelgeschwindigkeitsdetektor 38 , mit der ersten Kardanik 60A der ersten Bildstabilisierungseinheit 16A, mit der ersten Antriebseinheit 24A und mit der zweiten Antriebseinheit 24B verbunden. Die erste Steuer- und Kontrolleinheit 37A ist beispielsweise in dem ersten Gehäuseteil 2 angeordnet. Die zweite Steuer- und Kontrolleinheit 37B ist mit dem zweiten Winkelgeschwindigkeitsdetektor 39, mit der zweiten Kardanik 60B der zweiten Bildstabilisierungseinheit 16B, mit der dritten Antriebseinheit 24C und mit der vierten Antriebseinheit 24D verbunden. Die zweite Steuer- und Kontrolleinheit 37B ist beispielsweise in dem zweiten Gehäuseteil 3 angeordnet. Der Knickbrückensensor 40 ist sowohl mit der ersten Steuer- und Kontrolleinheit 37A als auch mit der zweiten Steuer- und Kontrolleinheit 37B verbunden. Darüber hinaus ist der erste Winkelgeschwindigkeitsdetektor 38 mit der zweiten Steuer- und Kontrolleinheit 37B verbunden. Ferner ist der zweite Winkelgeschwindigkeitsdetektor 39 mit der ersten Steuer- und Kontrolleinheit 37A verbunden. Dieses Ausführungsbeispiel verwendet demnach jeweils eine separate Steuer- und Kontrolleinheit zum einen für das erste optische Teilsystem 12 in dem ersten Gehäuseteil 2 und zum anderen für das zweite optische Teilsystem 13 in dem zweiten Gehäuseteil 3, wobei allerdings die Winkelgeschwindigkeitsdetektoren 38, 39 zur Detektion von Bewegungen des Fernglases 1 gemeinsam genutzt werden. Die Spannungsmesseinheit 64 ist sowohl mit der ersten Steuer- und Kontrolleinheit 37A als auch mit der zweiten Steuer- und Kontrolleinheit 37B verbunden.

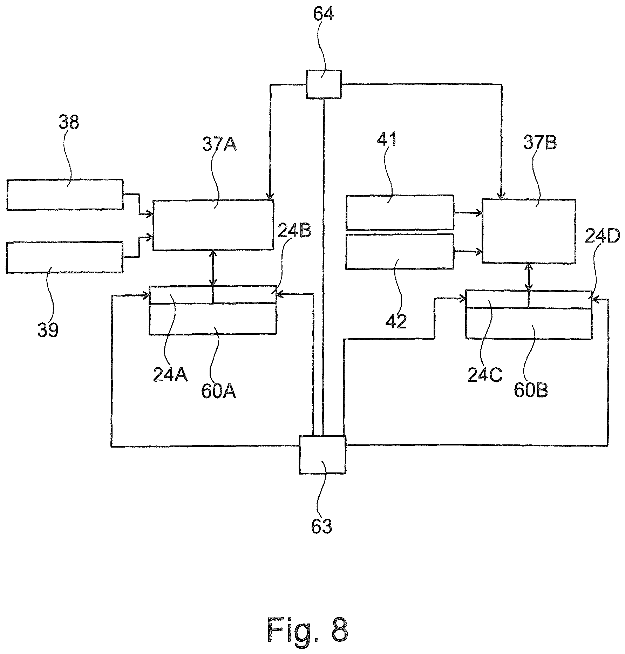

**Figur 8** zeigt ein Blockschaltbild eines weiteren Ausführungsbeispiels einer Anordnung von Steuer- und Messeinheiten. Das Ausführungsbeispiel der **Figur 8** beruht auf dem Ausführungsbeispiel der **Figur 6****.** Gleiche Baueinheiten sind mit gleichen Bezugszeichen versehen. Bei diesem Ausführungsbeispiel ist es vorgesehen, dass für jedes der beiden oben genannten Gehäuseteile 2 und 3 eine separate Steuereinheit vorgesehen ist. So sind in dem ersten Gehäuseteil 2 die erste Bildstabilisierungseinheit 16A, die erste Kardanik 60A, die erste Antriebseinheit 24A, die zweite Antriebseinheit 24B und die erste Steuer- und Kontrolleinheit 37A angeordnet. Die erste Steuer- und Kontrolleinheit 37A ist mit dem ersten Winkelgeschwindigkeitsdetektor 38 und dem zweiten Winkelgeschwindigkeitsdetektor 39 verbunden, die ebenfalls in dem ersten Gehäuseteil 2 angeordnet sind. Hingegen sind im zweiten Gehäuseteil 3 die zweite Bildstabilisierungseinheit 16B, die zweite Kardanik 60B, die dritte Antriebseinheit 24C, die vierte Antriebseinheit 24D und die zweite Steuer- und Kontrolleinheit 37B angeordnet. Ferner sind in dem zweiten Gehäuseteil 3 ein dritter Winkelgeschwindigkeitsdetektor 41 und ein vierter Winkelgeschwindigkeitsdetektor 42 angeordnet, welche die Bewegungen des Fernglases 1 ermitteln. Die Spannungsmesseinheit 64 ist sowohl mit der ersten Steuer- und Kontrolleinheit 37A als auch mit der zweiten Steuer- und Kontrolleinheit 37B verbunden.

Bei einer weiteren Ausführungsform der Erfindung ist es vorgesehen, dass mindestens einer der vorstehenden und/oder nachstehenden Winkelgeschwindigkeitsdetektoren durch einen Beschleunigungsdetektor ersetzt ist. Durch Integration über eine vorgebbare Zeit erhält man dann ebenfalls die Geschwindigkeit.

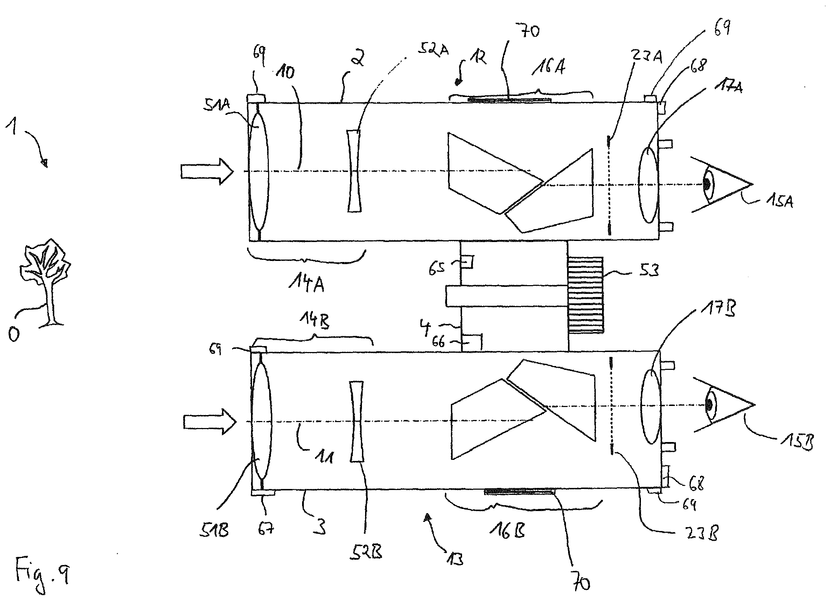

Die **Figur** 9 beruht auf der **Figur 1B****.** Gleiche Bauteile sind mit gleichen Bezugszeichen versehen. Zusätzlich zu dem Ausführungsbeispiel der **Figur 1B** weist das Ausführungsbeispiel der **Figur 9** Sensoren 65 bis 70 auf, deren Funktion nachfolgend erläutert wird. Ferner wird auch eine weitere Funktion der Spannungsmesseinheit 64 erläutert.

Grundsätzlich dienen die Spannungsmesseinheit 64 sowie die Sensoren 65 bis 70 dazu, den Energieverbrauch der vorgenannten Antriebseinheiten 24A bis 24D zu steuern und derart zu begrenzen, dass nur die in einer gegebenen Situation tatsächlich benötigte Energie verbraucht wird. Eine Bildstabilisierung durch Bewegung der ersten Bildstabilisierungseinheit 16A und der zweiten Bildstabilisierungseinheit 16B soll beispielsweise nur dann erfolgen, wenn ein Benutzer das Fernglas 1 auch tatsächlich benutzt. Ferner ist es bei dem Fernglas 1 vorgesehen, dass der Umfang und die Güte der Bildstabilisierung an die zur Verfügung stehende Energie angepasst werden. Darüber hinaus ist es bei dem Fernglas 1 vorgesehen, dass die Qualität der Bildstabilisierung an die Beobachtungssituation anpasst ist. Beispielsweise ist eine sehr hochqualitative Bildstabilisierung bei einer Benutzung des Fernglases 1 in der Dunkelheit oder bei einer sehr kleinen Vergrößerung nicht unbedingt notwendig.

Insbesondere ist es vorgesehen, dass die bereits zuvor beschriebene Spannungsmesseinheit 64 stets die noch zur Verfügung stehende Spannung der Spannungsversorgungseinheit 63 misst.

Sofern erkannt wird, dass die Spannungsversorgungseinheit 63 nur noch eine geringe Energie zur Verfügung stellen kann, wird beispielsweise der maximale Drehwinkel, mit dem die erste Bildstabilisierungseinheit 16A und/oder die zweite Bildstabilisierungseinheit 16B gedreht werden, begrenzt. Hierdurch werden die Bewegungen der beiden vorgenannten Bildstabilisierungseinheiten 16A und 16B kürzer und/oder langsamer. Hierdurch wird der Energieverbrauch gesenkt.

Bei einer weiteren Ausführungsform ist es vorgesehen, dass - sofern erkannt wird, dass die Spannungsversorgungseinheit 63 nur noch eine geringe Energie zur Verfügung stellen kann - niederfrequente und/oder hochfrequente Anteile einer Bewegung des Fernglases 1 (beispielsweise eine Zitterbewegung) nicht mehr bei der Bildstabilisierung berücksichtigt werden. Niederfrequente Anteile einer Bewegung wirken sich kaum auf eine Detailerkennbarkeit aus. Bei den niederfrequenten Anteilen handelt es sich um relativ große Bewegungen, so dass die Leistungsaufnahme der vorgenannten Antriebseinheiten 24A bis 24D verringert wird, wenn die niederfrequenten Anteile nicht mehr bei der Bildstabilisierung berücksichtigt werden. Wie oben bereits erläutert, sinkt der Energieverbrauch, wenn auch auf hochfrequente Anteile bei der Bildstabilisierung verzichtet wird.

Ferner ist es bei diesem Ausführungsbeispiel des Fernglases 1 vorgesehen, dass generell die Amplitude einer Bewegung mindestens einer der beiden vorgenannten Bildstabilisierungseinheiten 16A und 16B verringert wird, wenn die Spannungsversorgungseinheit 63 nur eine gewisse Energie zur Verfügung stellen kann. Zusätzlich oder alternativ ist es vorgesehen, dass die Geschwindigkeit, mit der mindestens eine der beiden Bildstabilisierungseinheiten 16A und 16B bewegt wird, auf eine maximale Geschwindigkeit begrenzt wird. Hierdurch sinkt die Leistungsaufnahme der entsprechenden Antriebseinheiten 24A bis 24D der jeweiligen Bildstabilisierungseinheit 16A und 16B.

Das Fernglas 1 weist einen an der Knickbrücke 4 angeordneten Helligkeitssensor 65 zur Ermittlung der Umgebungshelligkeit auf. Bei Dunkelheit ist die Wahrnehmung eines Benutzers des Fernglases 1 nicht mehr sehr schnell. Bewegungen des Fernglases 1 werden bei Dunkelheit nicht mehr derart wahrgenommen, dass sie als störend empfunden werden. Bei Dunkelheit schaltet die Steuer- und Kontrolleinheit 37, die erste Steuer- und Kontrolleinheit 37A oder die zweite Steuer- und Kontrolleinheit 37B daher auf einen Nachtmodus. Die Bildstabilisierung wird vollständig abgeschaltet. Alternativ hierzu ist es vorgesehen, den Drehwinkel der ersten Bildstabilisierungseinheit 16A und/oder der zweiten Bildstabilisierungseinheit 16B zu begrenzen. Alternativ ist es auch vorgesehen, die erste Bildstabilisierungseinheit 16A oder die zweite Bildstabilisierungseinheit 16B nur bei Überschreiten einer ersten Grenzfrequenz und/oder Unterschreiten einer zweiten Grenzfrequenz zu bewegen. Auf diese Weise werden hochfrequente Anteile und/oder niederfrequente Anteile der Bewegung des Fernglases 1 bei der Bildstabilisierung nicht berücksichtigt. Auch kann es dann vorgesehen sein, die Bewegungsgeschwindigkeit der ersten Bildstabilisierungseinheit 16A und/oder der zweiten Bildstabilisierungseinheit 16B zu begrenzen.

Das Fernglas 1 weist ferner einen an der Knickbrücke 4 angeordneten Lagesensor 66 zur Ermittlung einer Neigung des Fernglas 1 auf. Mittels des Lagesensors 66 ist es möglich, die Lage der optischen Achsen 10 und 11 des Fernglases 1 im Raum zu ermitteln. Wenn eine zu große Abweichung (beispielsweise eine Abweichung der optischen Achsen 10 und 11 um 70° bis 100° zur Horizontalen) festgestellt wird, dann kann davon ausgegangen werden, dass das Fernglas 1 nicht benutzt wird. In diesem Fall schaltet die Steuer- und Kontrolleinheit 37, die erste Steuer- und Kontrolleinheit 37A oder die zweite Steuer- und Kontrolleinheit 37B daher die Bildstabilisierung des Fernglases 1 ab.

Darüber hinaus ist das Fernglas 1 mit einem Sensor 67 zur Erkennung einer monokularen Anwendung des Fernglases 1 versehen. Dieser Sensor 67 ist beispielsweise am zweiten Gehäuseteil 3 im Bereich des zweiten Objektivs 16B angeordnet. Die Erfindung ist aber nicht auf diese Art der Anordnung eingeschränkt. Vielmehr kann der Sensor 67 an jeder Stelle des Fernglases 1 angeordnet sein, die hierfür geeignet ist. Wenn ein sogenannter Optik-Booster am zweiten Gehäuseteil 3 angeordnet wird, wird dies mittels des Sensors 67 erkannt. In diesem Fall schaltet die Steuer- und Kontrolleinheit 37, die erste Steuer- und Kontrolleinheit 37A oder die zweite Steuer- und Kontrolleinheit 37B daher die Bildstabilisierung des Fernglases 1 ab.

Das Fernglas 1 weist ferner im Bereich des ersten Okulars 17A und des zweiten Okulars 17B jeweils einen Augensensor 68 zur Erkennung der Augen 15A, 15B eines Benutzers auf. Als Augensensor 68 eignet sich beispielsweise ein Fotosensor zur Messung des Lichts am ersten Okular 17A und/oder am zweiten Okular 17B. Wiederum weitere Ausführungsbeispiele sehen eine Kapazitätsmessung vor. Wenn kein Auge sich an dem ersten Okular 17A und dem zweiten Okular 17B befindet, dann schaltet die Steuer- und Kontrolleinheit 37, die erste Steuer- und Kontrolleinheit 37A oder die zweite Steuer- und Kontrolleinheit 37B daher die Bildstabilisierung des Fernglases 1 ab.

An dem Fernglas ist im Bereich des ersten Objektivs 14A, des zweiten Objektivs 14B, des ersten Okulars 17A und des zweiten Okulars 17B jeweils ein Schutzkappensensor 69 angeordnet, welcher der Erkennung einer Anordnung einer Objektivschutzkappe und/oder Okularschutzkappe dient. Wenn auf dem ersten Objektiv 14A, dem zweiten Objektiv 14B, dem ersten Okular 17A und/oder dem zweiten Okular 17B eine Schutzkappe angeordnet ist, kann davon ausgegangen werden, dass das Fernglas 1 nicht benutzt wird. Die Steuer- und Kontrolleinheit 37, die erste Steuer- und Kontrolleinheit 37A oder die zweite Steuer- und Kontrolleinheit 37B schaltet dann die Bildstabilisierung des Fernglases 1 ab.

Sowohl an dem ersten Gehäuseteil 2 als auch an dem zweiten Gehäuseteil 3 des Fernglases 1 ist jeweils ein Handsensor 70 angeordnet. Die Handsensoren 70 dienen der Erkennung einer Anordnung einer Hand eines Benutzers an dem Fernglas 1. Beispielsweise wird ein kapazitiver Sensor (Kapazitätsmessung), ein Fotosensor oder ein Drucksensor als Handsensor 70 verwendet. Wenn erkannt wird, dass keine Hand das Fernglas 1 berührt, dann kann davon ausgegangen werden, dass das Fernglas 1 nicht benutzt wird. Die Steuer- und Kontrolleinheit 37, die erste Steuer- und Kontrolleinheit 37A oder die zweite Steuer- und Kontrolleinheit 37B schaltet dann die Bildstabilisierung des Fernglases 1 ab.

Auch der Knickbrückensensor 40 kann zur Optimierung des Energieverbrauchs mit eingesetzt werden. Mittels des Knickbrückensensors 40 wird festgestellt ob ein minimaler Knickbrückenwinkel a der Knickbrücke 4 vorhanden ist. Wenn der minimale Knickbrückenwinkel a eingestellt ist, kann davon ausgegangen werden, dass das Fernglas 1 transportiert wird. Die Steuer- und Kontrolleinheit 37, die erste Steuer- und Kontrolleinheit 37A oder die zweite Steuer- und Kontrolleinheit 37B schaltet dann die Bildstabilisierung des Fernglases 1 ab.

### Bezugszeichenliste

- 1: Fernglas
- 2: erstes Gehäuseteil
- 3: zweites Gehäuseteil
- 4: Knickbrücke
- 5: erstes Scharnierteil
- 6: zweites Scharnierteil
- 7: erstes Aufnahmeteil
- 8: zweites Aufnahmeteil
- 9: drittes Aufnahmeteil
- 10: erste optische Achse
- 11: zweite optische Achse
- 12: erstes optisches Teilsystem
- 13: zweites optisches Teilsystem
- 14A: erstes Objektiv
- 14B: zweites Objektiv
- 15A: erstes Auge
- 15B: zweites Auge
- 16A: erste Bildstabilisierungseinheit (erstes Prismensystem)
- 16B: zweite Bildstabilisierungseinheit (zweites Prismensystem)
- 17A: erstes Okular
- 17B: zweites Okular
- 18A: erste Achse
- 18B: dritte Achse
- 19A: zweite Achse
- 19B: vierte Achse
- 20A: erster Schnittpunkt
- 21: erste Eintrittsfläche
- 22: erste Austrittsfläche
- 23A: linke Zwischenbildebene
- 23B: rechte Zwischenbildebene
- 24: Antriebseinheit (Piezo-Biegeaktor)
- 24A: erste Antriebseinheit
- 24B: zweite Antriebseinheit
- 24C: dritte Antriebseinheit
- 24D: vierte Antriebseinheit
- 25: erste Piezokeramik
- 26: zweite Piezokeramik
- 27: Spannungseinheit
- 28: Fassung
- 29: Loslager
- 30: Hebelarm
- 31: Längsachse
- 32: Festlager
- 33: Klemmeinheit
- 34: Federblech
- 35: Stutzen

- 37: Steuer- und Kontrolleinheit
- 37A: erste Steuer- und Kontrolleinheit
- 37B: zweite Steuer- und Kontrolleinheit
- 38: erster Winkelgeschwindigkeitsdetektor
- 39: zweiter Winkelgeschwindigkeitsdetektor
- 40: Knickbrückensensor
- 41: dritter Winkelgeschwindigkeitsdetektor
- 42: vierter Winkelgeschwindigkeitsdetektor

- 51A: erste Fronteinheit
- 51B: zweite Fronteinheit
- 52A: erste Fokussiereinheit
- 52B: zweite Fokussiereinheit
- 53: Drehknopf
- 54A: erste Aperturblende
- 54B: zweite Aperturblende
- 55A: erste Augenmuschel
- 55B: zweite Augenmuschel

- 60A: erste Kardanik
- 60B: zweite Kardanik
- 61A: erste äußere Aufhängung
- 61B: zweite äußere Aufhängung
- 62A: erste innere Aufhängung
- 62B: zweite innere Aufhängung

- 63: Spannungsversorgungseinheit
- 64: Spannungsmesseinheit
- 65: Helligkeitssensor
- 66: Lagesensor
- 67: Sensor monokulare Anwendung
- 68: Augensensor
- 69: Schutzkappensensor
- 70: Handsensor
- 71: Klemmhalter
- 72: erste Scharnierteilachse
- 73: zweite Scharnierteilachse
- 74: Gelenkachse

- O: Objekt

## Patentansprüche

1. Optisches System (1) zur Abbildung eines Objekts (O), mit
- einem ersten Objektiv (14A),
- einer ersten Bildstabilisierungseinheit (16A),
- einer ersten Bildebene (23A),
wobei
- von dem ersten Objektiv (14A) in Richtung der ersten Bildebene (23A) gesehen zunächst das erste Objektiv (14A), dann die erste Bildstabilisierungseinheit (16A) und dann die erste Bildebene (23A) entlang einer ersten optischen Achse (10) angeordnet sind,
- die erste Bildstabilisierungseinheit (16A) eine erste Eintrittsfläche (21) und eine erste Austrittsfläche (23) aufweist,
- die erste Eintrittsfläche (21) zum ersten Objektiv (14A) gerichtet ist,
- die erste Austrittsfläche (22) zur ersten Bildebene (23A) gerichtet ist,
- das optische System (1) ein erstes Gehäuse (2) aufweist, wobei das erste Objektiv (14A), die erste Bildstabilisierungseinheit (16A) und die erste Bildebene (23A) in dem ersten Gehäuse (2) angeordnet sind,
- das optische System (1) ein zweites Objektiv (14B), eine zweite Bildstabilisierungseinheit (16B) und eine zweite Bildebene (23B) aufweist,
- von dem zweiten Objektiv (14B) in Richtung der zweiten Bildebene (23B) gesehen zunächst das zweite Objektiv (23B), dann die zweite Bildstabilisierungseinheit (16B) und dann die zweite Bildebene (23B) entlang einer zweiten optischen Achse (11) angeordnet sind,
- die zweite Bildstabilisierungseinheit (16B) eine zweite Eintrittsfläche und eine zweite Austrittsfläche aufweist,
- die zweite Eintrittsfläche zum zweiten Objektiv (14B) gerichtet ist,
- die zweite Austrittsfläche zur zweiten Bildebene (23B) gerichtet ist,
- das optische System (1) ein zweites Gehäuse (3) aufweist, wobei das zweite Objektiv (14B), die zweite Bildstabilisierungseinheit (16B) und die zweite Bildebene (23B) in dem zweiten Gehäuse (3) angeordnet sind,
- das erste Gehäuse (2) mit dem zweiten Gehäuse (3) über mindestens eine Knickbrücke (4) verbunden ist,
- die Knickbrücke (4) ein an dem ersten Gehäuse (2) angeordnetes erstes Scharnierteil (5) aufweist, und wobei
- die Knickbrücke (4) ein an dem zweiten Gehäuse (2) angeordnetes zweites Scharnierteil (6) aufweist.
**dadurch gekennzeichnet,**
**dass** die erste Austrittsfläche (22) in einem Bereich von 1 mm bis 20 mm beabstandet zur ersten Bildebene (23A) angeordnet ist, dass die zweite Austrittsfläche in einem Bereich von 1 mm bis 20 mm beabstandet zur zweiten Bildebene (23B) angeordnet ist und dass die erste Bildstabilisierungseinheit (16A) kardanisch im ersten Gehäuse (2) angeordnet ist.

2. Optisches System (1) nach Anspruch 1, **dadurch gekennzeichnet, dass** das optische System (1) eines der folgenden Merkmale aufweist:
- die erste Austrittsfläche (22) ist in einem Bereich von 2 mm bis 15 mm beabstandet zur ersten Bildebene (23A) angeordnet, oder
- die erste Austrittsfläche (22) ist in einem Bereich von 3 mm bis 12 mm beabstandet zur ersten Bildebene (23A) angeordnet.

3. Optisches System (1) nach Anspruch 1 oder 2, **dadurch gekennzeichnet, dass** die erste Bildstabilisierungseinheit (16A) beweglich ausgebildet ist.

4. Optisches System (1) nach einem der vorangehenden Ansprüche,
**dadurch gekennzeichnet, dass** das optische System (1) eines der folgenden Merkmale aufweist:
- eine erste Bilderfassungseinheit ist in der ersten Bildebene (23A) angeordnet,
- eine erste Bilderfassungseinheit ist in der ersten Bildebene (23A) angeordnet, wobei die erste Bilderfassungseinheit als ein Sensor auf Halbleiterbasis ausgebildet ist, oder
- das optische System (1) weist ein erstes Okular (17A) auf, wobei von dem ersten Objektiv (14A) in Richtung der ersten Bildebene (23A) gesehen zunächst die erste Bildebene (23A) und dann das erste Okular (17A) angeordnet sind.

5. Optisches System (1) nach Anspruch 1, **dadurch gekennzeichnet, dass**
- das optische System (1) ein erstes Okular (17A) aufweist, wobei von dem ersten Objektiv (14A) in Richtung der ersten Bildebene (23A) gesehen zunächst die erste Bildebene (23A) und dann das erste Okular (17A) angeordnet sind, und dass
- das erste Okular (17A) in dem ersten Gehäuse (2) angeordnet ist.

6. Optisches System (1) nach einem der vorangehenden Ansprüche,
**dadurch gekennzeichnet, dass** die zweite Bildstabilisierungseinheit (16B) beweglich ausgebildet ist.

7. Optisches System (1) nach einem der vorangehenden Ansprüche,
**dadurch gekennzeichnet, dass** das optische System (1) eines der folgenden Merkmale aufweist:
- in der zweiten Bildebene (23B) ist eine zweite Bilderfassungseinheit angeordnet,
- in der zweiten Bildebene (23B) ist eine zweite Bilderfassungseinheit angeordnet, die als ein Sensor auf Halbleiterbasis ausgebildet ist, oder
- das optische System (1) weist ein zweites Okular (17B) auf, wobei von dem zweiten Objektiv (14B) in Richtung der zweiten Bildebene (23B) gesehen zunächst die zweite Bildebene (23B) und dann das zweite Okular (17B) angeordnet sind.

8. Optisches System (1) nach Anspruch 1, **dadurch gekennzeichnet, dass**
- das optische System (1) ein zweites Okular (17B) aufweist, wobei von dem zweiten Objektiv (14B) in Richtung der zweiten Bildebene (23B) gesehen zunächst die zweite Bildebene (23B) und dann das zweite Okular (17B) angeordnet sind, und dass
- das zweite Okular (17B) in dem zweiten Gehäuse (3) angeordnet ist.

9. Optisches System (1) nach einem der vorangehenden Ansprüche,
**dadurch gekennzeichnet, dass** das optische System (1) eines der folgenden Merkmale aufweist:
- die erste Bildstabilisierungseinheit (16A) ist als erstes Umkehrsystem ausgebildet,
- die erste Bildstabilisierungseinheit (16A) ist als erstes Prismenumkehrsystem ausgebildet,
- die erste Bildstabilisierungseinheit (16A) ist als erstes Linsenumkehrsystem ausgebildet,
- die zweite Bildstabilisierungseinheit (16B) ist als zweites Umkehrsystem ausgebildet,
- die zweite Bildstabilisierungseinheit (16B) ist zweites Prismenumkehrsystem ausgebildet, oder
- die zweite Bildstabilisierungseinheit (16B) ist als zweites Linsenumkehrsystem ausgebildet.

10. Optisches System (1) nach einem der vorangehenden Ansprüche,
**dadurch gekennzeichnet, dass** das optische System (1) eines der folgenden Merkmale aufweist:
- die erste Bildstabilisierungseinheit (16A) ist um eine erste Achse (18A) und um eine zweite Achse (19A) drehbar im ersten Gehäuse (2) angeordnet, wobei die erste Achse (18A) und die zweite Achse (19A) sich in einem ersten Schnittpunkt (20) schneiden, der unterschiedlich zu einem ersten optischen neutralen Punkt auf der ersten optischen Achse (10) ist und der auf der ersten optischen Achse (10) angeordnet ist,
- mindestens eine erste Antriebseinheit (24, 24A, 24B) zur Bewegung der ersten Bildstabilisierungseinheit (16A),
- mindestens eine erste Antriebseinheit (24, 24A, 24B) zur Bewegung der ersten Bildstabilisierungseinheit (16A), wobei die erste Antriebseinheit (24, 24A, 24B) mindestens eine erste Piezokeramik aufweist,
- mindestens eine erste Antriebseinheit (24, 24A, 24B) zur Bewegung der ersten Bildstabilisierungseinheit (16A), wobei die erste Antriebseinheit (24, 24A, 24B) mindestens einen ersten Piezoaktor aufweist,
- mindestens eine erste Antriebseinheit (24, 24A, 24B) zur Bewegung der ersten Bildstabilisierungseinheit (16A), wobei die erste Antriebseinheit (24, 24A, 24B) mindestens einen ersten Piezo-Biegeaktor aufweist,
- mindestens eine erste Antriebseinheit (24, 24A, 24B) zur Bewegung der ersten Bildstabilisierungseinheit (16A) und mindestens eine erste Steuerungseinheit (37A) zur Steuerung der ersten Antriebseinheit (24, 24A, 24B),
- die zweite Bildstabilisierungseinheit (16B) ist kardanisch im zweiten Gehäuse (3) angeordnet,
- die zweite Bildstabilisierungseinheit (16B) ist um eine dritte Achse (18B) und um eine vierte Achse (19B) drehbar im zweiten Gehäuse (3) angeordnet, wobei die dritte Achse (18B) und die vierte Achse (19B) sich in einem zweiten Schnittpunkt schneiden, der unterschiedlich zu einem zweiten optischen neutralen Punkt auf der zweiten optischen Achse (11) ist und der auf der zweiten optischen Achse (11) angeordnet ist,
- mindestens eine zweite Antriebseinheit (24, 24C, 24D) zur Bewegung der zweiten Bildstabilisierungseinheit (16B),
- mindestens eine zweite Antriebseinheit (24, 24C, 24D) zur Bewegung der zweiten Bildstabilisierungseinheit (16B), wobei die zweite Antriebseinheit (24, 24C, 24D) mindestens eine zweite Piezokeramik aufweist,
- mindestens eine zweite Antriebseinheit (24, 24C, 24D) zur Bewegung der zweiten Bildstabilisierungseinheit (16B), wobei die zweite Antriebseinheit (24, 24C, 24D) mindestens einen zweiten Piezoaktor aufweist,
- mindestens eine zweite Antriebseinheit (24, 24C, 24D) zur Bewegung der zweiten Bildstabilisierungseinheit (16B), wobei die zweite Antriebseinheit (24, 24C, 24D) mindestens einen zweiten Piezo-Biegeaktor aufweist, oder
- mindestens eine zweite Antriebseinheit (24, 24C, 24D) zur Bewegung der zweiten Bildstabilisierungseinheit (16B) und mindestens eine zweite Steuerungseinheit (37B) zur Steuerung der zweiten Antriebseinheit (24, 24C, 24D).

11. Optisches System (1) nach Ansprüchen 3 und 6, **dadurch gekennzeichnet, dass** das optische System (1) mindestens eine Steuerungseinheit (37) zur Steuerung einer ersten Antriebseinheit (24, 24A, 24B) zur Bewegung der ersten Bildstabilisierungseinheit (16A) und einer zweiten Antriebseinheit (24, 24C, 24D) zur Bewegung der zweiten Bildstabilisierungseinheit (16B) aufweist.

12. Optisches System (1) nach einem der vorangehenden Ansprüche, , **dadurch gekennzeichnet, dass** das optische System (1) eines der folgenden Merkmale aufweist:
- mindestens einen Bewegungsdetektor (38, 39) zur Ermittlung einer Bewegung des optischen Systems (1),
- mindestens einen ersten Bewegungsdetektor (38) zur Ermittlung einer Bewegung des optischen Systems (1) und mindestens einen zweiten Bewegungsdetektor (39) zur Ermittlung einer Bewegung des optischen Systems (1),
- mindestens einen Stabilisierungsdetektor zur Ermittlung einer Bewegung der ersten Bildstabilisierungseinheit (16A) und/oder der zweiten Bildstabilisierungseinheit (16B), oder
- mindestens einen ersten Stabilisierungsdetektor zur Ermittlung einer Bewegung der ersten Bildstabilisierungseinheit (16A) und mindestens einen zweiten Stabilisierungsdetektor zur Ermittlung einer Bewegung der zweiten Bildstabilisierungseinheit (16B).

13. Optisches System (1) nach Anspruch 1, **dadurch gekennzeichnet, dass** das optische System (1) mindestens eines der folgenden Merkmale aufweist:
- das erste Gehäuse (2) ist als Tubus ausgebildet, oder
- das zweite Gehäuse (3) ist als Tubus ausgebildet.

14. Optisches System (1) nach Anspruch 10, **dadurch gekennzeichnet, dass** das optische System (1) mindestens eine Messeinrichtung (64) zur Messung der Spannung einer Spannungsversorgungseinheit (63) zur Versorgung der ersten Antriebseinheit (24, 24A, 24B) und/oder der zweiten Antriebseinheit (24, 24C, 24D) sowie mindestens eine Steuereinheit (37, 37A, 37B) aufweist, wobei die Steuereinheit (37, 37A, 37B) zu mindestens einer der nachfolgenden Eigenschaften ausgebildet ist:
- Begrenzung eines Drehwinkels der ersten Bildstabilisierungseinheit (16A) und/oder der zweiten Bildstabilisierungseinheit (16B);
- Bewegen der ersten Bildstabilisierungseinheit (16A) und/oder der zweiten Bildstabilisierungseinheit (16B) bei Überschreiten einer ersten Grenzfrequenz und/oder Unterschreiten einer zweiten Grenzfrequenz; oder
- Begrenzung einer Bewegungsgeschwindigkeit der ersten Bildstabilisierungseinheit (16A) und/oder der zweiten Bildstabilisierungseinheit (16B).

15. Optisches System (1) nach einem der vorangehenden Ansprüche, **dadurch gekennzeichnet, dass** das optische System (1) eines der folgenden Merkmale aufweist:
- mindestens einen Helligkeitssensor (65) zur Ermittlung der Umgebungshelligkeit und mindestens eine Systemsteuereinheit (37, 37A, 37B) zur Begrenzung eines Drehwinkels der ersten Bildstabilisierungseinheit (16A) und/oder der zweiten Bildstabilisierungseinheit (16B), und/oder zum Bewegen der ersten Bildstabilisierungseinheit (16A) oder der zweiten Bildstabilisierungseinheit (16B) bei Überschreiten einer ersten Grenzfrequenz und/oder Unterschreiten einer zweiten Grenzfrequenz, oder zur Begrenzung einer Bewegungsgeschwindigkeit der ersten Bildstabilisierungseinheit (16A) und/oder der zweiten Bildstabilisierungseinheit (16B);
- mindestens einen Lagesensor (66) zur Ermittlung einer Neigung des optischen Systems (1) und mindestens eine Systemsteuereinheit (37, 37A, 37B) zum Abschalten einer Bildstabilisierung bei dem optischen System (1);
- mindestens einen Sensor (67) zur Erkennung einer monokularen Anwendung des optischen Systems (1) und mindestens eine Systemsteuereinheit (37, 37A, 37B) zum Abschalten einer Bildstabilisierung bei dem optischen System (1);
- mindestens einen Sensor (68) zur Erkennung eines Auges eines Benutzers und mindestens eine Systemsteuereinheit (37, 37A, 37B) zum Abschalten einer Bildstabilisierung bei dem optischen System (1);
- mindestens einen Sensor (69) zur Erkennung einer Anordnung einer Objektivschutzkappe und/oder Okularschutzkappe sowie mindestens eine Systemsteuereinheit (37, 37A, 37B) zum Abschalten einer Bildstabilisierung bei dem optischen System (1);
- mindestens einen Sensor (70) zur Erkennung einer Anordnung einer Hand eines Benutzers und mindestens eine Systemsteuereinheit (37, 37A, 37B) zum Abschalten einer Bildstabilisierung bei dem optischen System (1); oder
- mindestens einen Sensor (40) zur Erkennung eines minimalen Knickwinkels der Knickbrücke (4) und mindestens eine Systemsteuereinheit (37, 37A, 37B) zum Abschalten einer Bildstabilisierung bei dem optischen System (1).

16. Optisches System (1) nach Anspruch 1, **dadurch gekennzeichnet, dass**
- die zweite Austrittsfläche in einem Bereich von 2 mm bis 15 mm oder in einem Bereich von 3 mm bis 12 mm beabstandet zur zweiten Bildebene (23B) angeordnet ist.

## Claims

1. Optical system (1) for imaging an object (O), comprising
- a first objective (14A),
- a first image stabilization unit (16A),
- a first image plane (23A),
wherein
- as viewed from the first objective (14A) in the direction of the first image plane (23A), firstly the first objective (14A), then the first image stabilization unit (16A) and then the first image plane (23A) are arranged along a first optical axis (10),
- the first image stabilization unit (16A) has a first entrance surface (21) and a first exit surface (23),
- the first entrance surface (21) is directed toward the first objective (14A),
- the first exit surface (22) is directed toward the first image plane (23A),
- the optical system (1) comprises a first housing (2), wherein the first objective (14A), the first image stabilization unit (16A) and the first image plane (23A) are arranged in the first housing (2),
- the optical system (1) comprises a second objective (14B), a second image stabilization unit (16B) and a second image plane (23B),
- as viewed from the second objective (14B) in the direction of the second image plane (23B), firstly the second objective (23B), then the second image stabilization unit (16B) and then the second image plane (23B) are arranged along a second optical axis (11),
- the second image stabilization unit (16B) has a second entrance surface and a second exit surface,
- the second entrance surface is directed toward the second objective (14B),
- the second exit surface is directed toward the second image plane (23B),
- the optical system (1) comprises a second housing (3), wherein the second objective (14B), the second image stabilization unit (16B) and the second image plane (23B) are arranged in the second housing (3),
- the first housing (2) is connected to the second housing (3) via at least one folding bridge (4),
- the folding bridge (4) has a first hinge part (5) arranged on the first housing (2), and wherein
- the folding bridge (4) has a second hinge part (6) arranged on the second housing (2),
**characterized**
**in that** the first exit surface (22) is arranged at a distance in a range of 1 mm to 20 mm from the first image plane (23A), in that the second exit surface is arranged at a distance in a range of 1 mm to 20 mm from the second image plane (23B), and in that the first image stabilization unit (16A) is arranged in cardan-type fashion in the first housing (2).

2. Optical system (1) according to Claim 1, **characterized in that** the optical system (1) comprises one of the following features:
- the first exit surface (22) is arranged at a distance in a range of 2 mm to 15 mm from the first image plane (23A), or
- the first exit surface (22) is arranged at a distance in a range of 3 mm to 12 mm from the first image plane (23A).

3. Optical system (1) according to Claim 1 or 2, **characterized in that** the first image stabilization unit (16A) is embodied in a movable fashion.

4. Optical system (1) according to any of the preceding claims, **characterized in that** the optical system (1) comprises one of the following features:
- a first image acquisition unit is arranged in the first image plane (23A),
- a first image acquisition unit is arranged in the first image plane (23A), wherein the first image acquisition unit is embodied as a semiconductor-based sensor, or
- the optical system (1) comprises a first eyepiece (17A), wherein firstly the first image plane (23A) and then the first eyepiece (17A) are arranged as viewed from the first objective (14A) in the direction of the first image plane (23A).

5. Optical system (1) according to Claim 1, **characterized in that**
- the optical system (1) comprises a first eyepiece (17A), wherein firstly the first image plane (23A) and then the first eyepiece (17A) are arranged as viewed from the first objective (14A) in the direction of the first image plane (23A), and **in that**
- the first eyepiece (17A) is arranged in the first housing (2).

6. Optical system (1) according to any of the preceding claims, **characterized in that** the second image stabilization unit (16B) is embodied in a movable fashion.

7. Optical system (1) according to any of the preceding claims, **characterized in that** the optical system (1) comprises one of the following features:
- a second image acquisition unit is arranged in the second image plane (23B),
- a second image acquisition unit embodied as a semiconductor-based sensor is arranged in the second image plane (23B), or
- the optical system (1) comprises a second eyepiece (17B), wherein firstly the second image plane (23B) and then the second eyepiece (17B) are arranged as viewed from the second objective (14B) in the direction of the second image plane (23B).

8. Optical system (1) according to Claim 1, **characterized in that**
- the optical system (1) comprises a second eyepiece (17B), wherein firstly the second image plane (23B) and then the second eyepiece (17B) are arranged as viewed from the second objective (14B) in the direction of the second image plane (23B), and **in that**
- the second eyepiece (17B) is arranged in the second housing (3).

9. Optical system (1) according to any of the preceding claims, **characterized in that** the optical system (1) comprises one of the following features:
- the first image stabilization unit (16A) is embodied as a first erecting system,
- the first image stabilization unit (16A) is embodied as a first prism erecting system,
- the first image stabilization unit (16A) is embodied as a first lens erecting system,
- the second image stabilization unit (16B) is embodied as a second erecting system,
- the second image stabilization unit (16B) is embodied as a second prism erecting system, or
- the second image stabilization unit (16B) is embodied as a second lens erecting system.

10. Optical system (1) according to any of the preceding claims, **characterized in that** the optical system (1) comprises one of the following features:
- the first image stabilization unit (16A) is arranged in the first housing (2) in a manner rotatable about a first axis (18A) and about a second axis (19A), wherein the first axis (18A) and the second axis (19A) intersect at a first intersection point (20), which differs from a first optical neutral point on the first optical axis (10) and which is arranged on the first optical axis (10),
- at least one first drive unit (24, 24A, 24B) for moving the first image stabilization unit (16A),
- at least one first drive unit (24, 24A, 24B) for moving the first image stabilization unit (16A), wherein the first drive unit (24, 24A, 24B) comprises at least one first piezoceramic,
- at least one first drive unit (24, 24A, 24B) for moving the first image stabilization unit (16A), wherein the first drive unit (24, 24A, 24B) comprises at least one first piezo-actuator,
- at least one first drive unit (24, 24A, 24B) for moving the first image stabilization unit (16A), wherein the first drive unit (24, 24A, 24B) comprises at least one first piezo-bending actuator, or
- at least one first drive unit (24, 24A, 24B) for moving the first image stabilization unit (16A) and at least one first control unit (37A) for controlling the first drive unit (24, 24A, 24B),
- the second image stabilization unit (16B) is arranged with cardan-type mounting in the second housing (3),
- the second image stabilization unit (16B) is arranged in the second housing (3) in a manner rotatable about a third axis (18B) and about a fourth axis (19B), wherein the third axis (18B) and the fourth axis (19B) intersect at a second intersection point, which differs from a second optical neutral point on the second optical axis (11) and which is arranged on the second optical axis (11),
- at least one second drive unit (24, 24C, 24D) for moving the second image stabilization unit (16B),
- at least one second drive unit (24, 24C, 24D) for moving the second image stabilization unit (16B), wherein the second drive unit (24, 24C, 24D) comprises at least one second piezoceramic,
- at least one second drive unit (24, 24C, 24D) for moving the second image stabilization unit (16B), wherein the second drive unit (24, 24C, 24D) comprises at least one second piezo-actuator,
- at least one second drive unit (24, 24C, 24D) for moving the second image stabilization unit (16B), wherein the second drive unit (24, 24C, 24D) comprises at least one second piezo-bending actuator, or
- at least one second drive unit (24, 24C, 24D) for moving the second image stabilization unit (16B) and at least one second control unit (37B) for controlling the second drive unit (24, 24C, 24D).

11. Optical system (1) according to Claims 3 and 6, **characterized in that** the optical system (1) comprises at least one control unit (37) for controlling a first drive unit (24, 24A, 24B) for moving the first image stabilization unit (16A) and a second drive unit (24, 24C, 24D) for moving the second image stabilization unit (16B) .

12. Optical system (1) according to any of the preceding claims, **characterized in that** the optical system (1) comprises one of the following features:
- at least one motion detector (38, 39) for determining a motion of the optical system (1),
- at least one first motion detector (38) for determining a motion of the optical system (1) and at least one second motion detector (39) for determining a motion of the optical system (1),
- at least one stabilization detector for determining a motion of the first image stabilization unit (16A) and/or of the second image stabilization unit (16B), or
- at least one first stabilization detector for determining a motion of the first image stabilization unit (16A) and at least one second stabilization detector for determining a motion of the second image stabilization unit (16B).

13. Optical system (1) according to Claim 1, **characterized in that** the optical system (1) comprises at least one of the following features:
- the first housing (2) is embodied as a tube, or
- the second housing (3) is embodied as a tube.

14. Optical system (1) according to Claim 10, **characterized in that** the optical system (1) comprises at least one measuring device (64) for measuring the voltage of a voltage supply unit (63) for supplying the first drive unit (24, 24A, 24B) and/or the second drive unit (24, 24C, 24D) and at least one control unit (37, 37A, 37B), wherein the control unit (37, 37A, 37B) is designed with regard to at least one of the following properties:
- limiting an angle of rotation of the first image stabilization unit (16A) and/or of the second image stabilization unit (16B);
- moving the first image stabilization unit (16A) and/or the second image stabilization unit (16B) upon a first limit frequency being exceeded and/or a second limit frequency being undershot; or
- limiting a speed of motion of the first image stabilization unit (16A) and/or of the second image stabilization unit (16B).

15. Optical system (1) according to any of the preceding claims, **characterized in that** the optical system (1) comprises one of the following features:
- at least one brightness sensor (65) for determining the ambient brightness and at least one system control unit (37, 37A, 37B) for limiting an angle of rotation of the first image stabilization unit (16A) and/or of the second image stabilization unit (16B), and/or for moving the first image stabilization unit (16A) or the second image stabilization unit (16B) upon a first limit frequency being exceeded and/or a second limit frequency being undershot, or for limiting a speed of motion of the first image stabilization unit (16A) and/or of the second image stabilization unit (16B) ;
- at least one position sensor (66) for determining an inclination of the optical system (1) and at least one system control unit (37, 37A, 37B) for switching off an image stabilization at the optical system (1);
- at least one sensor (67) for identifying a monocular application of the optical system (1) and at least one system control unit (37, 37A, 37B) for switching off an image stabilization at the optical system (1);
- at least one sensor (68) for identifying an eye of a user and at least one system control unit (37, 37A, 37B) for switching off an image stabilization at the optical system (1);
- at least one sensor (69) for identifying an arrangement of an objective protective cap and/or eyepiece protective cap and at least one system control unit (37, 37A, 37B) for switching off an image stabilization at the optical system (1);
- at least one sensor (70) for identifying an arrangement of a hand of a user and at least one system control unit (37, 37A, 37B) for switching off an image stabilization at the optical system (1); or
- at least one sensor (40) for identifying a minimum folding angle of the folding bridge (4) and at least one system control unit (37, 37A, 37B) for switching off an image stabilization at the optical system (1).

16. Optical system (1) according to Claim 1, **characterized in that**
- the second exit surface is arranged at a distance in a range of 2 mm to 15 mm or in a range of 3 mm to 12 mm from the second image plane (23B).

## Revendications

1. Système optique (1) destiné à représenter un objet (0), ledit système comprenant
- un premier objectif (14A),
- une première unité de stabilisation d'image (16A),
- un premier plan d'image (23A),
- lorsque l'on regarde depuis le premier objectif (14A) en direction du premier plan d'image (23A), tout d'abord le premier objectif (14A), puis la première unité de stabilisation d'image (16A) et ensuite le premier plan d'image (23A) étant disposés le long d'un premier axe optique (10),
- la première unité de stabilisation d'image (16A) comportant une première surface d'entrée (21) et une première surface de sortie (23),
- la première surface d'entrée (21) étant dirigée vers le premier objectif (14A),
- la première surface de sortie (22) étant dirigée vers le premier plan image (23A),
- le système optique (1) comportant un premier boîtier (2), le premier objectif (14A), la première unité de stabilisation d'image (16A) et le premier plan d'image (23A) étant disposés dans le premier boîtier (2),
- le système optique (1) comportant un deuxième objectif (14B), une deuxième unité de stabilisation d'image (16B) et un deuxième plan d'image (23B),
- lorsque l'on regarde depuis le deuxième objectif (14B) en direction du deuxième plan image (23B), tout d'abord le deuxième objectif (23B), puis la deuxième unité de stabilisation d'image (16B) et ensuite le deuxième plan d'image (23B) étant disposés le long d'un deuxième axe optique (11),
- la deuxième unité de stabilisation d'image (16B) comportant une deuxième surface d'entrée et une deuxième surface de sortie,
- la deuxième surface d'entrée étant dirigée vers le deuxième objectif (14B),
- la deuxième surface de sortie étant dirigée vers le deuxième plan image (23B),
- le système optique (1) comportant un deuxième boîtier (3), le deuxième objectif (14B), la deuxième unité de stabilisation d'image (16B) et le deuxième plan d'image (23B) étant disposés dans le deuxième boîtier (3),
- le premier boîtier (2) étant relié au deuxième boîtier (3) par le biais d'au moins un pont articulé (4),
- le pont articulé (4) comportant une première partie d'articulation (5) disposée au niveau du premier boîtier (2), et
- le pont articulé (4) comportant une deuxième partie d'articulation (6) disposée au niveau du deuxième boîtier (2),
**caractérisé en ce que**
la première surface de sortie (22) est disposée dans une zone distante de 1 mm à 20 mm du premier plan d'image (23A), la deuxième surface de sortie est disposée dans une zone distante de 1 mm à 20 mm du deuxième plan d'image (23B) et la première unité de stabilisation d'image (16A) est disposée à cardan dans le premier boîtier (2).

2. Système optique (1) selon la revendication 1, **caractérisé en ce que** le système optique (1) présente l'une des caractéristiques suivantes :
- la première surface de sortie (22) est disposée dans une zone distante de 2 mm à 15 mm du premier plan d'image (23A), ou
- la première surface de sortie (22) est disposée dans une zone distante de 3 mm à 12 mm du premier plan d'image (23A).

3. Système optique (1) selon la revendication 1 ou 2, **caractérisé en ce que** la première unité de stabilisation d'image (16A) est conçue pour être mobile.

4. Système optique (1) selon l'une des revendications précédentes, **caractérisé en ce que** le système optique (1) présente l'une des caractéristiques suivantes :
- une première unité d'acquisition d'image est disposée dans le premier plan image (23A),
- une première unité d'acquisition d'image est disposée dans le premier plan image (23A), la première unité d'acquisition d'image étant conçue comme un capteur à base de semi-conducteur, ou
- le système optique (1) comporte un premier oculaire (17A), le premier plan d'image (23A) étant disposé en premier et le premier oculaire (17A) étant disposé ensuite lorsque l'on regarde depuis le premier objectif (14A) en direction du premier plan d'image (23A).

5. Système optique (1) selon la revendication 1, **caractérisé en ce que**
- le système optique (1) comporte un premier oculaire (17A), le premier plan d'image (23A) étant disposé en premier et le premier oculaire (17A) étant disposé ensuite lorsque l'on regarde depuis le premier objectif (14A) en direction du premier plan d'image (23A), et
- le premier oculaire (17A) est disposé dans le premier boîtier (2).

6. Système optique (1) selon l'une des revendications précédentes, **caractérisé en ce que** la deuxième unité de stabilisation d'image (16B) est conçue pour être mobile.

7. Système optique (1) selon l'une des revendications précédentes, **caractérisé en ce que** le système optique (1) présente l'une des caractéristiques suivantes :
- une deuxième unité d'acquisition d'image est disposée dans le deuxième plan image (23B),
- une deuxième unité d'acquisition d'image, qui est conçue comme un capteur à base de semi-conducteur, est disposée dans le deuxième plan d'image (23B), ou
- le système optique (1) comporte un deuxième oculaire (17B), le deuxième plan d'image (23B) étant disposé en premier et le deuxième oculaire (17B) étant disposé ensuite lorsque l'on regarde depuis le deuxième objectif (14B) en direction du deuxième plan d'image (23B).

8. Système optique (1) selon la revendication 1, **caractérisé en ce que**
- le système optique (1) comporte un deuxième oculaire (17B), le deuxième plan d'image (23B) étant disposé en premier et le deuxième oculaire (17B) étant disposé ensuite lorsque l'on regarde depuis le deuxième objectif (14B) en direction du deuxième plan d'image (23B), et
- le deuxième oculaire (17B) est disposé dans le deuxième boîtier (3).

9. Système optique (1) selon l'une des revendications précédentes, **caractérisé en ce que** le système optique (1) présente l'une des caractéristiques suivantes :
- la première unité de stabilisation d'image (16A) est conçue comme un premier système d'inversion,
- la première unité de stabilisation d'image (16A) est conçue comme un premier système d'inversion à prismes,
- la première unité de stabilisation d'image (16A) est conçue comme un premier système d'inversion à lentilles,
- la deuxième unité de stabilisation d'image (16B) est conçue comme un deuxième système d'inversion,
- la deuxième unité de stabilisation d'image (16B) est conçue comme un deuxième système d'inversion à prismes, ou
- la deuxième unité de stabilisation d'image (16B) est conçue comme un deuxième système d'inversion à lentilles.

10. Système optique (1) selon l'une des revendications précédentes, **caractérisé en ce que** le système optique (1) présente l'une des caractéristiques suivantes :
- la première unité de stabilisation d'image (16A) est disposée dans le premier boîtier (2) de manière à pouvoir tourner sur un premier axe (18A) et sur un deuxième axe (19A), le premier axe (18A) et le deuxième axe (19A) se coupant en un premier point d'intersection (20) qui est différent d'un premier point optique neutre sur le premier axe optique (10) et qui est disposé sur le premier axe optique (10),
- au moins une première unité d'entraînement (24, 24A, 24B) destinée à déplacer la première unité de stabilisation d'image (16A),
- au moins une première unité d'entraînement (24, 24A, 24B) destinée à déplacer la première unité de stabilisation d'image (16A), la première unité d'entraînement (24, 24A, 24B) comportant au moins une première céramique piézoélectrique,
- au moins une première unité d'entraînement (24, 24A, 24B) destinée à déplacer la première unité de stabilisation d'image (16A), la première unité d'entraînement (24, 24A, 24B) comportant au moins un premier actionneur piézoélectrique,
- au moins une première unité d'entraînement (24, 24A, 24B) destinée à déplacer la première unité de stabilisation d'image (16A), la première unité d'entraînement (24, 24A, 24B) comportant au moins un premier actionneur de flexion piézoélectrique,
- au moins une première unité d'entraînement (24, 24A, 24B) destinée à déplacer la première unité de stabilisation d'image (16A) et au moins une première unité de commande (37A) destinée à commander la première unité d'entraînement (24, 24A, 24B),
- la deuxième unité de stabilisation d'image (16B) est disposée à cardan dans le deuxième boîtier (3),
- la deuxième unité de stabilisation d'image (16B) est disposée dans le deuxième boîtier (3) de manière à pouvoir tourner sur un troisième axe (18B) et sur un quatrième axe (19B), le troisième axe (18B) et le quatrième axe (19B) se coupant en un deuxième point d'intersection qui est différent d'un deuxième point neutre optique sur le deuxième axe optique (11) et qui est disposé sur le deuxième axe optique (11),
- au moins une deuxième unité d'entraînement (24, 24C, 24D) destinée à déplacer la deuxième unité de stabilisation d'image (16B),
- au moins une deuxième unité d'entraînement (24, 24C, 24D) destinée à déplacer la deuxième unité de stabilisation d'image (16B), la deuxième unité d'entraînement (24, 24C, 24D) comportant au moins une deuxième céramique piézoélectrique,
- au moins une deuxième unité d'entraînement (24, 24C, 24D) destinée à déplacer la deuxième unité de stabilisation d'image (16B), la deuxième unité d'entraînement (24, 24C, 24D) comportant au moins un deuxième actionneur piézoélectrique,
- au moins une deuxième unité d'entraînement (24, 24C, 24D) destinée à déplacer la deuxième unité de stabilisation d'image (16B), la deuxième unité d'entraînement (24, 24C, 24D) comportant au moins un deuxième actionneur de flexion piézoélectrique, ou
- au moins une deuxième unité d'entraînement (24, 24C, 24D) destinée à déplacer la deuxième unité de stabilisation d'image (16B) et au moins une deuxième unité de commande (37B) destinée à commander la deuxième unité d'entraînement (24, 24C, 24D).

11. Système optique (1) selon les revendications 3 et 6, **caractérisé en ce que** le système optique (1) comporte au moins une unité de commande (37) destinée à commander une première unité d'entraînement (24, 24A, 24B) destinée à déplacer la première unité de stabilisation d'image (16A) et une deuxième unité d'entraînement (24, 24C, 24D) destinée à déplacer la deuxième unité de stabilisation d'image (16B).

12. Système optique (1) selon l'une des revendications précédentes, **caractérisé en ce que** le système optique (1) présente l'une des caractéristiques suivantes :
- au moins un détecteur de mouvement (38, 39) destiné à déterminer un mouvement du système optique (1),
- au moins un premier détecteur de mouvement (38) destiné à déterminer un mouvement du système optique (1) et au moins un deuxième détecteur de mouvement (39) destiné à déterminer un mouvement du système optique (1),
- au moins un détecteur de stabilisation destiné à déterminer un mouvement de la première unité de stabilisation d'image (16A) et/ou de la deuxième unité de stabilisation d'image (16B), ou
- au moins un premier détecteur de stabilisation destiné à déterminer un mouvement de la première unité de stabilisation d'image (16A) et au moins un deuxième détecteur de stabilisation destiné à déterminer un mouvement de la deuxième unité de stabilisation d'image (16B) .

13. Système optique (1) selon la revendication 1, **caractérisé en ce que** le système optique (1) comporte au moins l'une des caractéristiques suivantes :
- le premier boîtier (2) est conçu comme un tube, ou
- le deuxième boîtier (3) est conçu comme un tube.

14. Système optique (1) selon la revendication 10, **caractérisé en ce que** le système optique (1) comporte au moins un dispositif de mesure (64), destiné à mesurer la tension d'une unité d'alimentation en tension (63) destinée à alimenter la première unité d'entraînement (24, 24A, 24B) et/ou la deuxième unité d'entraînement (24, 24C, 24D), et au moins une unité de commande (37, 37A, 37B), l'unité de commande (37, 37A, 37B) étant conçue pour l'une au moins des propriétés suivantes :
- limitation d'un angle de rotation de la première unité de stabilisation d'image (16A) et/ou de la deuxième unité de stabilisation d'image (16B) ;
- déplacement de la première unité de stabilisation d'image (16A) et/ou de la deuxième unité de stabilisation d'image (16B) lorsqu'une première fréquence limite est dépassée vers le haut et/ou lorsqu'une deuxième fréquence limite est dépassée vers le bas ; ou
- limitation d'une vitesse de déplacement de la première unité de stabilisation d'image (16A) et/ou de la deuxième unité de stabilisation d'image (16B).

15. Système optique (1) selon l'une des revendications précédentes, **caractérisé en ce que** le système optique (1) présente l'une des caractéristiques suivantes :
- au moins un capteur de luminosité (65) destiné à déterminer la luminosité ambiante et au moins une unité de commande de système (37, 37A, 37B) destinée à limiter un angle de rotation de la première unité de stabilisation d'image (16A) et/ou de la deuxième unité de stabilisation d'image (16B), et/ou à déplacer la première unité de stabilisation d'image (16A) ou la deuxième unité de stabilisation d'image (16B) lorsqu'une première fréquence limite est dépassée vers le haut et/ou lorsqu'une deuxième fréquence limite est dépassée vers le bas, ou à limiter une vitesse de déplacement de la première unité de stabilisation d'image (16A) et/ou de la deuxième unité de stabilisation d'image (16B) ;
- au moins un capteur de position (66) destiné à déterminer une inclinaison du système optique (1) et au moins une unité de commande de système (37, 37A, 37B) destinée à désactiver la stabilisation d'image dans le système optique (1) ;
- au moins un capteur (67) destiné à détecter une application monoculaire du système optique (1) et au moins une unité de commande de système (37, 37A, 37B) destinée à désactiver la stabilisation d'image dans le système optique (1) ;
- au moins un capteur (68) destiné à détecter un œil d'un utilisateur et au moins une unité de commande de système (37, 37A, 37B) destinée à désactiver la stabilisation d'image dans le système optique (1) ;
- au moins un capteur (69) destiné à détecter un agencement d'un capuchon d'objectif et/ou d'un capuchon d'oculaire et au moins une unité de commande de système (37, 37A, 37B) destinée à désactiver la stabilisation d'image dans le système optique (1) ;
- au moins un capteur (70) destiné à détecter un agencement d'une main d'un utilisateur et au moins une unité de commande de système (37, 37A, 37B) destinée à désactiver la stabilisation d'image dans le système optique (1) ; ou
- au moins un capteur (40) destiné à détecter un angle d'articulation minimum du pont d'articulation (4) et au moins une unité de commande de système (37, 37A, 37B) destinée à désactiver la stabilisation d'image dans le système optique (1).

16. Système optique (1) selon la revendication 1, **caractérisé en ce que**
- la deuxième surface de sortie est disposée dans une zone distante de 2 mm à 15 mm, ou dans une zone distante de 3 mm à 12 mm, du deuxième plan image (23B).
